# EUROPEAN PATENT SPECIFICATION

(11) **EP 4 111 622 B1**
(45) Date of publication and mention of the grant of the patent: **25.06.2025**
(21) Application number: 21883283.0
(22) Date of filing: 21.10.2021
(51) Int. Cl.: H04L 1/18, H04L 5/00, H04W 72/04, H04W 72/12

(54) **METHOD AND APPARATUS FOR TRANSMITTING AND RECEIVING HYBRID AUTOMATIC RETRANSMISSION REQUEST ACKNOWLEDGEMENT INFORMATION IN A WIRELESS COMMUNICATION SYSTEM**
VERFAHREN UND VORRICHTUNG ZUM SENDEN UND EMPFANGEN VON BESTÄTIGUNGSINFORMATIONEN HYBRIDER AUTOMATISCHER NEUÜBERTRAGUNGSANFRAGEN IN EINEM DRAHTLOSKOMMUNIKATIONSSYSTEM
PROCÉDÉ ET APPAREIL POUR TRANSMETTRE ET RECEVOIR DES INFORMATIONS D'ACCUSÉ DE RÉCEPTION DE DEMANDE DE RETRANSMISSION AUTOMATIQUE HYBRIDE DANS UN SYSTÈME DE COMMUNICATION SANS FIL

(30) Priority: 21.10.2020 CN 202011134141; 21.10.2020 CN 202011135926; 06.01.2021 CN 202110014008; 14.01.2021 CN 202110050508; 17.05.2021 CN 202110532873; 05.08.2021 CN 202110897705
(43) Date of publication of application: 04.01.2023
(73) Proprietor: Samsung Electronics Co., Ltd., Gyeonggi-do 16677 (KR)
(72) Inventor: FU, Jingxing, Suwon-si Gyeonggi-do 16677 (KR); SUN, Feifei, Suwon-si Gyeonggi-do 16677 (KR); ZHANG, Sa, Suwon-si Gyeonggi-do 16677 (KR)
(74) Representative: Gulde & Partner
(86) International application number: PCT/KR2021/014806
(87) International publication number: WO 2022/086215

(56) References cited:
- EP-A1- 3 297 193
- US-A1- 2015 223 240
- US-A1- 2020 162 207
- US-A1- 2020 295 878
- US-A1- 2020 322 097
- HUAWEI ET AL: "Discussion on the HARQ timing for NR UE CA performance requirements", vol. RAN WG4, no. Online Meeting ;20200420 - 20200430, 10 April 2020 (2020-04-10), XP051872280, Retrieved from the Internet <URL:https://ftp.3gpp.org/tsg_ran/WG4_Radio/TSGR4_94_eBis/Docs/R4-2003717.zip R4-2003717 Disc HARQ timing for NR CA.doc> [retrieved on 20200410]

## Description

### Technical Field

The present disclosure relates to wireless communication technology, and in particular, to a method and an apparatus for transmitting hybrid automatic retransmission request acknowledgement (HARQ-ACK) feedback information.

### Background Art

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged. As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology.

In order to meet the increasing demand for wireless data communication services since the deployment of 4G communication systems, efforts have been made to develop improved 5G or pre-5G communication systems. Therefore, 5G or pre-5G communication systems are also called "Beyond 4G networks" or "Post-LTE systems".

In order to achieve a higher data rate, 5G communication systems are implemented in higher frequency (millimeter, mmWave) bands, e.g., 60 GHz bands. In order to reduce propagation loss of radio waves and increase a transmission distance, technologies such as beamforming, massive multiple-input multiple-output (MIMO), full-dimensional MIMO (FD-MIMO), array antenna, analog beamforming and large-scale antenna are discussed in 5G communication systems.

In addition, in 5G communication systems, developments of system network improvement are underway based on advanced small cell, cloud radio access network (RAN), ultra-dense network, device-to-device (D2D) communication, wireless backhaul, mobile network, cooperative communication, coordinated multi-points (CoMP), reception-end interference cancellation, etc.

In 5G systems, hybrid FSK and QAM modulation (FQAM) and sliding window superposition coding (SWSC) as advanced coding modulation (ACM), and filter bank multicarrier (FBMC), non-orthogonal multiple access (NOMA) and sparse code multiple access (SCMA) as advanced access technologies have been developed.

A known PUCCH transmission method is disclosed in HUAWEI ET AL: "Discussion on the HARQ timing for NR UE CA performance requirements", 3GPP DRAFT; R4-2003717, 2020-04-10.

### Disclosure of Invention

### Technical Problem

The present disclosure provides a method for transmitting HARQ-ACK feedback information, and describes a method for transmitting HARQ-ACK for the multicast physical downlink shared channel (PDSCH).

In order to achieve the above purpose, the present disclosure adopts the following technical solutions.

### Solution to Problem

The invention is defined by the appended claims.

### Advantageous Effects of Invention

Further, in this disclosure, the method for transmitting HARQ-ACK for PDSCH is described, so that under a premise of saving PDSCH and PDCCH in multicast and unicast technology, it can accurately transmit the HARQ-ACK feedback information for PDSCH by using reasonable power at as few PUCCH resources as possible.

### Brief Description of Drawings

Fig.1 illustrates an example wireless network according to various embodiments of the present disclosure.
Fig.2a illustrates an example wireless transmission path according to the present disclosure.
Fig. 2b illustrates an example wireless reception path according to the present disclosure.
Fig.3a illustrates an example UE according to the present disclosure.
Fig.3b illustrates an example gNB according to the present disclosure.
Fig.4 illustrates an example in which the UE transmits a HARQ-ACK for a unicast PDSCH.
Fig.5 illustrates an exemplary flow chart of a method for transmitting Hybrid Automatic Retransmission Request Acknowledgement (HARQ-ACK) information according to an embodiment of the present disclosure.
Fig.6 illustrates a schematic diagram of a method for transmitting HARQ-ACK for the multicast PDSCH and HARQ-ACK for the unicast PDSCH by the UE according to an embodiment of the present disclosure.
Fig.7 illustrates a schematic diagram of a situation where the HARQ-ACK for PDSCH cannot be transmitted.
Fig.8 illustrates a schematic diagram of another method for transmitting HARQ-ACK of PDSCH according to an embodiment of the present disclosure.
Fig.9 illustrates an exemplary flowchart of a method for transmitting HARQ-ACK information for PDSCH according to an embodiment of the present disclosure.
Fig.10 illustrates an exemplary flowchart of a method for transmitting HARQ-ACK information for PDSCH according to an embodiment of the present disclosure.
Fig.11 illustrates an exemplary flowchart of a method for determining to transmit the HARQ-ACK information for PDSCH according to an embodiment of the present disclosure.
FIG.12 illustrates a schematic diagram of determining a position of a HARQ-ACK timing reference point k1=0 according to an embodiment of the present disclosure.
FIG. 13 illustrates a schematic diagram of determining a position of a HARQ-ACK timing reference point k1=0 according to an embodiment of the present disclosure.
FIG.14 illustrates a schematic diagram of determining PUCCH transmission time unit according to an embodiment of the present disclosure.
FIG. 15 illustrates a schematic diagram of determining PUCCH transmission time unit according to an embodiment of the present disclosure.
Fig.16 illustrates an exemplary flow chart of a method for receiving hybrid automatic retransmission request acknowledgement (HARQ-ACK) information according to an embodiment of the present disclosure.
Fig.17 illustrates an exemplary flowchart of a method for transmitting HARQ-ACK for PDSCH according to an embodiment of the present disclosure.
FIG.18 illustrates an exemplary flowchart of a method for transmitting an aperiodic channel state information (CSI) report according to an embodiment of the present disclosure.
Fig.19 illustrates an exemplary flowchart of a method for receiving hybrid automatic retransmission request acknowledgement (HARQ-ACK) information according to an embodiment of the present disclosure.
Fig.20 illustrates an exemplary flowchart of a method for receiving hybrid automatic retransmission request acknowledgement (HARQ-ACK) information according to an embodiment of the present disclosure.
Fig 21 illustrates an exemplary view for determining maximum delay time according to an embodiment of the present disclosure.
Fig 22 illustrates an exemplary view for determining maximum delay time according to an embodiment of the present disclosure.
Fig.23 illustrates an electronic device according to embodiments of the present disclosure.
Fig.24 illustrates a base station according to embodiments of the present disclosure.

### Mode for the Invention

Before undertaking the detailed description below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

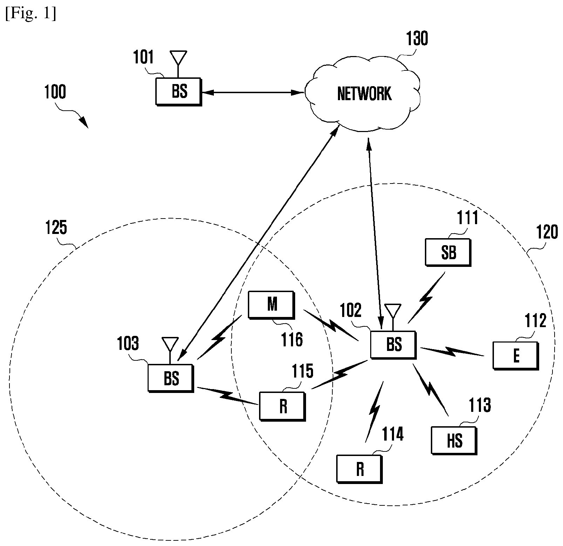

FIGS. 1 through 24, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

In order to make the purpose, technical solution and advantages of the present disclosure more clear, various exemplary embodiments of the present disclosure are described below the accompanying drawings to further describe the present disclosure in detail.

Fig.1 illustrates an example wireless network 100 according to various embodiments of the present disclosure. The embodiment of the wireless network 100 shown in Fig.1 is for illustration only. Other embodiments of the wireless network 100 can be used without departing from the scope of the present disclosure.

The wireless network 100 includes a gNodeB (gNB) 101, a gNB 102, and a gNB 103. gNB 101 communicates with gNB 102 and gNB 103. gNB 101 also communicates with at least one Internet Protocol (IP) network 130, such as the Internet, a private IP network, or other data networks.

Depending on a type of the network, other well-known terms such as "base station" or "access point" can be used instead of "gNodeB" or "gNB". For convenience, the terms "gNodeB" and "gNB" are used in this patent document to refer to network infrastructure components that provide wireless access for remote terminals. And, depending on the type of the network, other well-known terms such as "mobile station", "user station", "remote terminal", "wireless terminal" or "user apparatus" can be used instead of "user equipment" or "UE". For convenience, the terms "user equipment" and "UE" are used in this patent document to refer to remote wireless devices that wirelessly access the gNB, no matter whether the UE is a mobile device (such as a mobile phone or a smart phone) or a fixed device (such as a desktop computer or a vending machine).

gNB 102 provides wireless broadband access to the network 130 for a first plurality of User Equipments (UEs) within a coverage area 120 of gNB 102. The first plurality of UEs include a UE 111, which may be located in a Small Business (SB); a UE 112, which may be located in an enterprise (E); a UE 113, which may be located in a WiFi Hotspot (HS); a UE 114, which may be located in a first residence (R); a UE 115, which may be located in a second residence (R); a UE 116, which may be a mobile device (M), such as a cellular phone, a wireless laptop computer, a wireless PDA, etc. GNB 103 provides wireless broadband access to network 130 for a second plurality of UEs within a coverage area 125 of gNB 103. The second plurality of UEs include a UE 115 and a UE 116. In some embodiments, one or more of gNBs 101-103 can communicate with each other and with UEs 111-116 using 5G, Long Term Evolution (LTE), LTE-A, WiMAX or other advanced wireless communication technologies.

The dashed lines show approximate ranges of the coverage areas 120 and 125, and the ranges are shown as approximate circles merely for illustration and explanation purposes. It should be clearly understood that the coverage areas associated with the gNBs, such as the coverage areas 120 and 125, may have other shapes, including irregular shapes, depending on configurations of the gNBs and changes in the radio environment associated with natural obstacles and man-made obstacles.

As will be described in more detail below, one or more of gNB 101, gNB 102, and gNB 103 include a 2D antenna array as described in embodiments of the present disclosure. In some embodiments, one or more of gNB 101, gNB 102, and gNB 103 support codebook designs and structures for systems with 2D antenna arrays.

Although Fig.1 illustrates an example of the wireless network 100, various changes can be made to Fig.1. The wireless network 100 can include any number of gNBs and any number of UEs in any suitable arrangement, for example. Furthermore, gNB 101 can directly communicate with any number of UEs and provide wireless broadband access to the network 130 for those UEs. Similarly, each gNB 102-103 can directly communicate with the network 130 and provide direct wireless broadband access to the network 130 for the UEs. In addition, gNB 101, 102 and/or 103 can provide access to other or additional external networks, such as external telephone networks or other types of data networks.

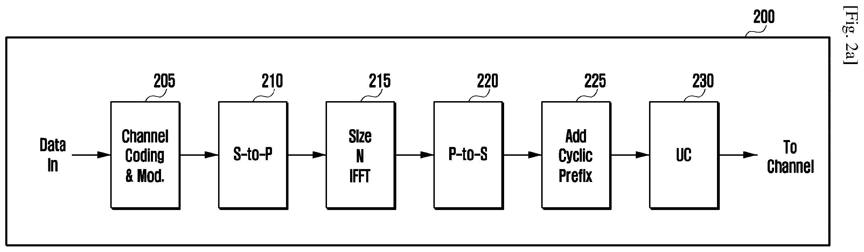

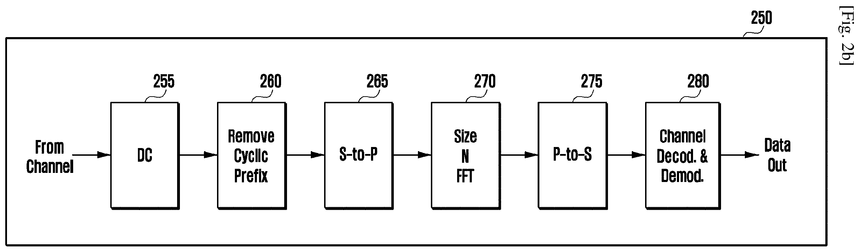

FIGs. 2a and 2b illustrate example wireless transmission and reception paths according to the present disclosure. In the following description, the transmission path 200 can be described as being implemented in a gNB, such as gNB 102, and the reception path 250 can be described as being implemented in a UE, such as UE 116. However, it should be understood that the reception path 250 can be implemented in a gNB and the transmission path 200 can be implemented in a UE. In some embodiments, the reception path 250 is configured to support codebook designs and structures for systems with 2D antenna arrays as described in embodiments of the present disclosure.

The transmission path 200 includes a channel coding and modulation block 205, a Serial-to-Parallel (S-to-P) block 210, a size N Inverse Fast Fourier Transform (IFFT) block 215, a Parallel-to-Serial (P-to-S) block 220, a cyclic prefix addition block 225, and an up-converter (UC) 230. The reception path 250 includes a down-converter (DC) 255, a cyclic prefix removal block 260, a Serial-to-Parallel (S-to-P) block 265, a size N Fast Fourier Transform (FFT) block 270, a Parallel-to-Serial (P-to-S) block 275, and a channel decoding and demodulation block 280.

In the transmission path 200, the channel coding and modulation block 205 receives a set of information bits, applies coding (such as Low Density Parity Check (LDPC) coding), and modulates the input bits (such as using Quadrature Phase Shift Keying (QPSK) or Quadrature Amplitude Modulation (QAM)) to generate a sequence of frequency-domain modulated symbols. The Serial-to-Parallel (S-to-P) block 210 converts (such as demultiplexes) serial modulated symbols into parallel data to generate N parallel symbol streams, where N is a size of the IFFT/FFT used in the gNB 102 and the UE 116. The size N IFFT block 215 performs IFFT operations on the N parallel symbol streams to generate a time-domain output signal. The Parallel-to-Serial block 220 converts (such as multiplexes) parallel time-domain output symbols from the Size N IFFT block 215 to generate a serial time-domain signal. The cyclic prefix addition block 225 inserts a cyclic prefix into the time-domain signal. The up-converter 230 modulates (such as up-converts) the output of the cyclic prefix addition block 225 to an RF frequency for transmission via a wireless channel. The signal can also be filtered at a baseband before switching to the RF frequency.

The RF signal transmitted from gNB 102 arrives at the UE 116 after passing through the wireless channel, and operations in reverse to those at gNB 102 are performed at the UE 116. The down-converter 255 down-converts the received signal to a baseband frequency, and the cyclic prefix removal block 260 removes the cyclic prefix to generate a serial time-domain baseband signal. The Serial-to-Parallel block 265 converts the time-domain baseband signal into a parallel time-domain signal. The Size N FFT block 270 performs an FFT algorithm to generate N parallel frequency-domain signals. The Parallel-to-Serial block 275 converts the parallel frequency-domain signal into a sequence of modulated data symbols. The channel decoding and demodulation block 280 demodulates and decodes the modulated symbols to recover the original input data stream.

Each of gNBs 101-103 may implement a transmission path 200 similar to that for transmitting to UEs 111-116 in the downlink, and may implement a reception path 250 similar to that for receiving from UEs 111-116 in the uplink. Similarly, each of UEs 111-116 may implement a transmission path 200 for transmitting to gNBs 101-103 in the uplink, and may implement a reception path 250 for receiving from gNBs 101-103 in the downlink.

Each of the components in FIGs. 2a and 2b can be implemented using only hardware, or using a combination of hardware and software/firmware. As a specific example, at least some of the components in FIGs. 2a and 2b may be implemented in software, while other components may be implemented in configurable hardware or a combination of software and configurable hardware. For example, the FFT block 270 and IFFT block 215 may be implemented as configurable software algorithms, in which the value of the size N may be modified according to the implementation.

Furthermore, although described as using FFT and IFFT, this is only illustrative and should not be interpreted as limiting the scope of the present disclosure. Other types of transforms can be used, such as Discrete Fourier transform (DFT) and Inverse Discrete Fourier Transform (IDFT) functions. It should be understood that for DFT and IDFT functions, the value of variable N may be any integer (such as 1, 2, 3, 4, etc.), while for FFT and IFFT functions, the value of variable N may be any integer which is a power of 2 (such as 1, 2, 4, 8, 16, etc.).

Although FIGs. 2a and 2b illustrate examples of wireless transmission and reception paths, various changes may be made to FIGs. 2a and 2b. For example, various components in FIGs. 2a and 2b can be combined, further subdivided or omitted, and additional components can be added according to specific requirements. Furthermore, FIGs. 2a and 2b are intended to illustrate examples of types of transmission and reception paths that can be used in a wireless network. Any other suitable architecture can be used to support wireless communication in a wireless network.

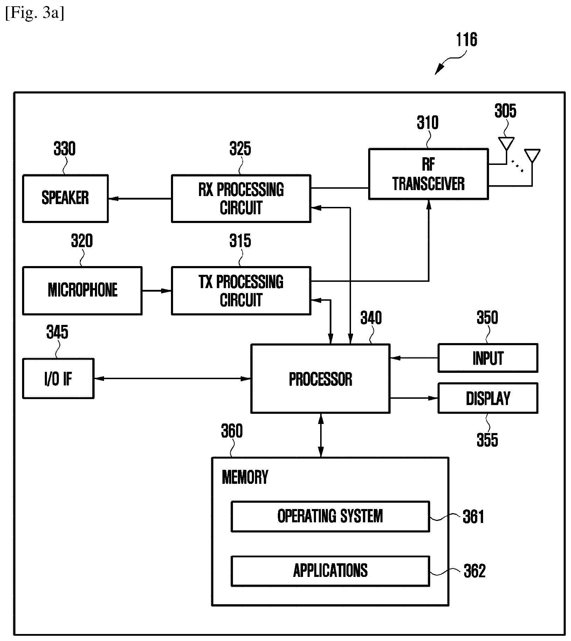

Fig.3a illustrates an example UE 116 according to the present disclosure. The embodiment of UE 116 shown in Fig.3a is for illustration only, and UEs 111-115 of Fig.1 can have the same or similar configuration. However, a UE has various configurations, and Fig.3a does not limit the scope of the present disclosure to any specific implementation of the UE.

UE 116 includes an antenna 305, a radio frequency (RF) transceiver 310, a transmission (TX) processing circuit 315, a microphone 320, and a reception (RX) processing circuit 325. UE 116 also includes a speaker 330, a processor/controller 340, an input/output (I/O) interface 345, an input device(s) 350, a display 355, and a memory 360. The memory 360 includes an operating system (OS) 361 and one or more applications 362.

The RF transceiver 310 receives an incoming RF signal transmitted by a gNB of the wireless network 100 from the antenna 305. The RF transceiver 310 down-converts the incoming RF signal to generate an intermediate frequency (IF) or baseband signal. The IF or baseband signal is transmitted to the RX processing circuit 325, where the RX processing circuit 325 generates a processed baseband signal by filtering, decoding and/or digitizing the baseband or IF signal. The RX processing circuit 325 transmits the processed baseband signal to speaker 330 (such as for voice data) or to processor/ controller 340 for further processing (such as for web browsing data).

The TX processing circuit 315 receives analog or digital voice data from microphone 320 or other outgoing baseband data (such as network data, email or interactive video game data) from processor/controller 340. The TX processing circuit 315 encodes, multiplexes, and/or digitizes the outgoing baseband data to generate a processed baseband or IF signal. The RF transceiver 310 receives the outgoing processed baseband or IF signal from the TX processing circuit 315 and up-converts the baseband or IF signal into an RF signal transmitted via the antenna 305.

The processor/controller 340 can include one or more processors or other processing devices and execute an OS 361 stored in the memory 360 in order to control the overall operation of UE 116. For example, the processor/controller 340 can control the reception of forward channel signals and the transmission of backward channel signals through the RF transceiver 310, the RX processing circuit 325 and the TX processing circuit 315 according to well-known principles. In some embodiments, the processor/ controller 340 includes at least one microprocessor or microcontroller.

The processor/controller 340 is also capable of executing other processes and programs residing in the memory 360, such as operations for channel quality measurement and reporting for systems with 2D antenna arrays as described in embodiments of the present disclosure. The processor/controller 340 can move data into or out of the memory 360 as required by an execution process. In some embodiments, the processor/controller 340 is configured to execute the application 362 based on the OS 361 or in response to signals received from the gNB or the operator. The processor/ controller 340 is also coupled to an I/O interface 345, where the I/O interface 345 provides the UE 116 with the ability to connect to other devices such as laptop computers and handheld computers. I/O interface 345 is a communication path between these accessories and the processor/controller 340.

The processor/controller 340 is also coupled to the input device(s) 350 and the display 355. An operator of UE 116 can input data into the UE 116 using the input device(s) 350. The display 355 may be a liquid crystal display or other display capable of presenting text and/or at least limited graphics (such as from a website). The memory 360 is coupled to the processor/controller 340. A part of the memory 360 can include a random access memory (RAM), while another part of the memory 360 can include a flash memory or other read-only memory (ROM).

Although Fig.3a illustrates an example of UE 116, various changes can be made to Fig.3a. For example, various components in Fig.3a can be combined, further subdivided or omitted, and additional components can be added according to specific requirements. As a specific example, the processor/controller 340 can be divided into a plurality of processors, such as one or more central processing units (CPUs) and one or more graphics processing units (GPUs). Furthermore, although Fig.3a illustrates that the UE 116 is configured as a mobile phone or a smart phone, UEs can be configured to operate as other types of mobile or fixed devices.

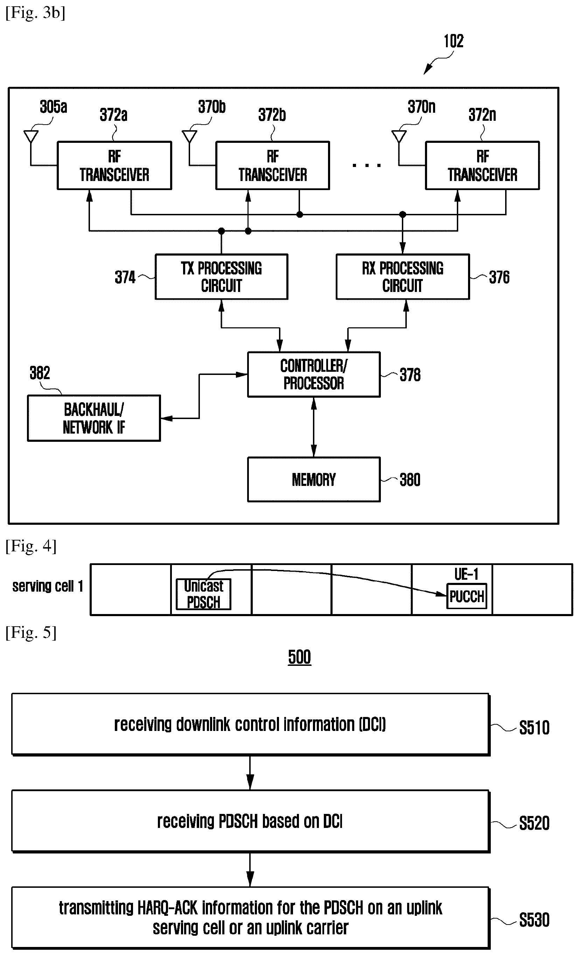

Fig.3b illustrates an example gNB 102 according to the present disclosure. The embodiment of gNB 102 shown in Fig.3b is for illustration only, and other gNBs of Fig.1 can have the same or similar configuration. However, a gNB has various configurations, and Fig.3b does not limit the scope of the present disclosure to any specific implementation of a gNB. It should be noted that gNB 101 and gNB 103 can include the same or similar structures as gNB 102.

As shown in Fig.3b, gNB 102 includes a plurality of antennas 370a-370n, a plurality of RF transceivers 372a-372n, a transmission (TX) processing circuit 374, and a reception (RX) processing circuit 376. In certain embodiments, one or more of the plurality of antennas 370a-370n include a 2D antenna array. gNB 102 also includes a controller/processor 378, a memory 380, and a backhaul or network interface 382.

RF transceivers 372a-372n receive an incoming RF signal from antennas 370a-370n, such as a signal transmitted by UEs or other gNBs. RF transceivers 372a-372n downconvert the incoming RF signal to generate an IF or baseband signal. The IF or baseband signal is transmitted to the RX processing circuit 376, where the RX processing circuit 376 generates a processed baseband signal by filtering, decoding and/or digitizing the baseband or IF signal. RX processing circuit 376 transmits the processed baseband signal to controller/processor 378 for further processing.

The TX processing circuit 374 receives analog or digital data (such as voice data, network data, email or interactive video game data) from the controller/processor 378. TX processing circuit 374 encodes, multiplexes and/or digitizes outgoing baseband data to generate a processed baseband or IF signal. RF transceivers 372a-372n receive the outgoing processed baseband or IF signal from TX processing circuit 374 and up-convert the baseband or IF signal into an RF signal transmitted via antennas 370a-370n.

The controller/processor 378 can include one or more processors or other processing devices that control the overall operation of gNB 102. For example, the controller/ processor 378 can control the reception of forward channel signals and the transmission of backward channel signals through the RF transceivers 372a-372n, the RX processing circuit 376 and the TX processing circuit 374 according to well-known principles. The controller/processor 378 can also support additional functions, such as higher-level wireless communication functions. For example, the controller/processor 378 can perform a Blind Interference Sensing (BIS) process such as that performed through a BIS algorithm, and decode a received signal from which an interference signal is subtracted. A controller/processor 378 may support any of a variety of other functions in gNB 102. In some embodiments, the controller/processor 378 includes at least one microprocessor or microcontroller.

The controller/processor 378 is also capable of executing programs and other processes residing in the memory 380, such as a basic OS. The controller/processor 378 can also support channel quality measurement and reporting for systems with 2D antenna arrays as described in embodiments of the present disclosure. In some embodiments, the controller/processor 378 supports communication between entities such as web RTCs. The controller/processor 378 can move data into or out of the memory 380 as required by an execution process.

The controller/processor 378 is also coupled to the backhaul or network interface 382. The backhaul or network interface 382 allows gNB 102 to communicate with other devices or systems through a backhaul connection or through a network. The backhaul or network interface 382 can support communication over any suitable wired or wireless connection(s). For example, when gNB 102 is implemented as a part of a cellular communication system, such as a cellular communication system supporting 5G or new radio access technology or NR, LTE or LTE-A, the backhaul or network interface 382 can allow gNB 102 to communicate with other gNBs through wired or wireless backhaul connections. When gNB 102 is implemented as an access point, the backhaul or network interface 382 can allow gNB 102 to communicate with a larger network, such as the Internet, through a wired or wireless local area network or through a wired or wireless connection. The backhaul or network interface 382 includes any suitable structure that supports communication through a wired or wireless connection, such as an Ethernet or an RF transceiver.

The memory 380 is coupled to the controller/processor 378. A part of the memory 380 can include an RAM, while another part of the memory 380 can include a flash memory or other ROMs. In certain embodiments, a plurality of instructions, such as the BIS algorithm, are stored in the memory. The plurality of instructions are configured to cause the controller/processor 378 to execute the BIS process and decode the received signal after subtracting at least one interference signal determined by the BIS algorithm.

As will be described in more detail below, the transmission and reception paths of gNB 102 (implemented using RF transceivers 372a-372n, TX processing circuit 374 and/or RX processing circuit 376) support aggregated communication with FDD cells and TDD cells.

Although Fig.3b illustrates an example of gNB 102, various changes may be made to Fig.3b. For example, gNB 102 can include any number of each component shown in Fig.3a. As a specific example, the access point can include many backhaul or network interfaces 382, and the controller/processor 378 can support routing functions to route data between different network addresses. As another specific example, although shown as including a single instance of the TX processing circuit 374 and a single instance of the RX processing circuit 376, gNB 102 can include multiple instances of each (such as one for each RF transceiver).

A transmission from a base station to a user equipment (UE) is called as downlink, and a transmission from the UE to the base station is called as an uplink. HARQ-ACK information for physical downlink shared channel (PDSCH) may be transmitted on a physical uplink shared channel (PUSCH) or a physical uplink control channel (PUCCH), the PDSCH is scheduled by downlink control information (DCI) transmitted on a physical downlink control channel (PDCCH).

A unicast PDSCH is one PDSCH received by one UE. Alternatively, scrambling of the PDSCH is based on a UE-specific radio network temporary indicator (RNTI), such as a C-RNTI; a groupcast PDSCH or a multicast/broadcast PDSCH is one PDSCH received by more than one UE at the same time.

There is a need for a scheme for transmitting the HARQ-ACK of PDSCH.

The exemplary embodiments of the present disclosure are further described below with reference to the accompanying drawings.

The specification and drawings are provided as examples only to assist in a comprehensive understanding of the present disclosure. They are not intended and should not be construed as limiting the scope of the present disclosure in any way. Although certain embodiments and examples have been provided, based on the content disclosed herein, it is obvious to those skilled in the art that the illustrated embodiments and examples shown can be modified without departing from the scope of the present disclosure.

Fig.4 shows an example in which the UE transmits the HARQ-ACK for the unicast PDSCH.

In a case of uplink carrier aggregation (CA), the UE transmits the HARQ-ACK for the unicast PDSCH on the PUCCH or PUSCH in the uplink serving cell.

Alternatively, for a case of a supplementary uplink carrier (SUL), the UE transmits the HARQ-ACK for the unicast PDSCH on the PUCCH or PUSCH of the uplink carrier.

At present, it is also required to provide the HARQ-ACK transmission method of the multicast PDSCH in the case of CA and SUL.

Next, the HARQ-ACK transmission method of multicast PDSCH will be described in the case of uplink CA. However, those skilled in the art should understand that these methods can also be applied to the case of SUL.

Fig.5 shows an exemplary flow chart of a method 500 for transmitting hybrid automatic retransmission request acknowledgement (HARQ-ACK) information according to an embodiment of the present disclosure. The method 500 may be implemented at the UE side.

As shown in Fig.5, at step S510 of method 500, downlink control information (DCI) is received.

At step S520, a PDSCH is received based on DCI.

At step S530, HARQ-ACK information for the PDSCH is transmitted on an uplink serving cell or an uplink carrier.

Therefore, according to the embodiment of the present disclosure, the serving cell or carrier for transmitting the HARQ-ACK for PDSCH can be determined, and the HARQ-ACK information for PDSCH can be transmitted on the determined serving cell or carrier.

Here, the PDSCH may be a multicast PDSCH or a unicast PDSCH. According to the embodiment of the present disclosure, the uplink serving cell, or the uplink bandwidth part (UL BWP), or the uplink carrier for transmitting the HARQ-ACK information for the multicast PDSCH can be determined according to an indication.

The indication may be an explicit information indication or an implicit information indication.

Hereinafter, two methods for determining the uplink serving cell or the uplink carrier transmitting the HARQ-ACK information for the multicast PDSCH will be described.

In one embodiment of the present disclosure, the uplink serving cell or uplink carrier is an uplink serving cell or an uplink carrier for transmitting PUCCH.

In an example, the uplink serving cell for transmitting the PUCCH is a Pcell or a Scell configured to transmit the PUCCH.

According to the embodiment of the present disclosure, the uplink serving cell or uplink carrier transmitting the HARQ-ACK information for the multicast PDSCH is the uplink serving cell or uplink carrier transmitting HARQ-ACK information for the unicast PDSCH.

In the above case, for UEs receiving both multicast PDSCH and unicast PDSCH, in the case of uplink CA, the HARQ-ACK for the multicast PDSCH and the HARQ-ACK for the unicast PDSCH may be transmitted in the same uplink serving cell, that is, the UE transmits the HARQ-ACK for the multicast PDSCH in the uplink serving cell transmitting the HARQ-ACK information for the unicast PDSCH.

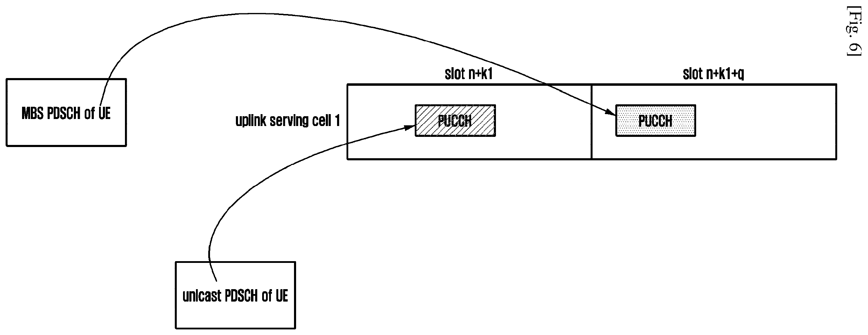

Fig.6 illustrates a schematic diagram of a method for transmitting HARQ-ACK for the multicast PDSCH and HARQ-ACK for the unicast PDSCH to a UE according to an embodiment of the present disclosure.

In the case of CA, the HARQ-ACK for the multicast PDSCH is transmitted in the serving cell transmitting the PUCCH, and the serving cell transmitting the HARQ-ACK for the multicast PDSCH may be the PCell or the Scell that transmits PUCCH.

As shown in Fig.6, in the case of uplink CA, the HARQ-ACK for the unicast PDSCH for the UE is transmitted on the PUCCH of an uplink serving cell 1, which is the primary cell (Pcell) of the UE or the cell configured to transmit the PUCCH, the HARQ-ACK for the multicast PDSCH for the UE is also transmitted on the PUCCH of the uplink serving cell 1.

The advantage of this method is that the HARQ-ACK for the multicast PDSCH and the HARQ-ACK for the unicast PDSCH are transmitted in one uplink serving cell. There can be only one set of PUCCH power control parameters, and the HARQ-ACK for the multicast PDSCH and the HARQ-ACK for the unicast PDSCH can be multiplexed on one PUCCH, which can ensure the transmission performance of the HARQ-ACK for the multicast PDSCH better.

Here, the PUCCH may be replaced with a PUSCH of the same serving cell, that is, the HARQ-ACK for multicast PDSCH and the HARQ-ACK for unicast PDSCH may be transmitted on the PUSCH.

In the case of SUL, the HARQ-ACK for the multicast PDSCH is transmitted on the carrier transmitting PUCCH, and the HARQ-ACK for the multicast PDSCH may be a SUL carrier or a non-SUL carrier.

In the case of SUL, the HARQ-ACK for the multicast PDSCH and the HARQ-ACK for the unicast PDSCH may be transmitted on the same carrier, that is, the UE transmits the HARQ-ACK for the multicast PDSCH on the uplink carrier transmitting the HARQ-ACK for the unicast PDSCH.

The advantage of this method is that the HARQ-ACK for the multicast PDSCH and the HARQ-ACK for the unicast PDSCH are transmitted on one uplink carrier, and there can be only one set of power control parameters, and the HARQ-ACK for the multicast PDSCH and the HARQ-ACK for the unicast PDSCH can be multiplexed on one PUCCH or PUSCH.

According to the embodiment of the present disclosure, since the serving cells for transmitting the HARQ-ACK for the unicast PDSCH by different UEs may be not the same uplink serving cell, and the same UE may transmit the HARQ-ACK for the multicast PDSCH and the HARQ-ACK for the unicast PDSCH in the same uplink serving cell, therefore, the serving cells of PUCCH transmitting the HARQ-ACK for the multicast PDSCH by different UEs may be not the same serving cell. For example, a UE-1 transmits the HARQ-ACK for the received unicast PDSCH in an uplink serving cell 1, and the UE-1 also transmits the HARQ-ACK for the received multicast PDSCH in the uplink serving cell 1, while a UE-2 transmits the HARQ-ACK for the received unicast PDSCH in an uplink serving cell 2, and the UE-2 also transmits the HARQ-ACK for the received multicast PDSCH in the uplink serving cell 2.

In this way, different UEs may receive the same multicast PDSCH, but the different UEs may transmit the HARQ-ACK for the multicast PDSCH in different uplink serving cells.

With this method, since the different UEs have different distances from the base station, the UEs being far away from the base station need to feedback HARQ-ACK on a low-frequency serving cell, while the UEs being close to the base station may feedback the HARQ-ACK on a high-frequency serving cell, the different UEs transmitting HARQ-ACK in different uplink serving cells can ensure the uplink coverage of different UEs better, thereby ensuring the transmission performance of the HARQ-ACK for the multicast PDSCH.

Similarly, according to the embodiment of the present disclosure, in the case of SUL, since the different UEs may not transmit the HARQ-ACK for the unicast PDSCH on the same carrier, for example, the UE-1 transmits the HARQ-ACK in an uplink primary cell but the UE-2 transmits the HARQ-ACK in a Supplement Uplink (SUL), and the same UE transmits the HARQ-ACK for the multicast PDSCH and HARQ-ACK for the unicast PDSCH on the same uplink carrier, therefore, the PUCCHs for transmitting the HARQ-ACK for the multicast PDSCH by the different UEs may not be the same carrier. For example, the UE-1 transmits the HARQ-ACK for the received multicast PDSCH on the uplink carrier 1, and the UE-2 transmits the HARQ-ACK for the received multicast PDSCH on the uplink carrier 2.

With this method, since the different UEs have different distances from the base station, the UEs being far away from the base station need to feedback HARQ-ACK on the low-frequency carrier, while the UEs being close to the base station may feedback HARQ-ACK on the high-frequency carrier, the different UEs transmitting the HARQ-ACK on different uplink carriers can ensure the uplink coverage of different UEs better, thereby ensuring the transmission performance of the HARQ-ACK for the multicast PDSCH.

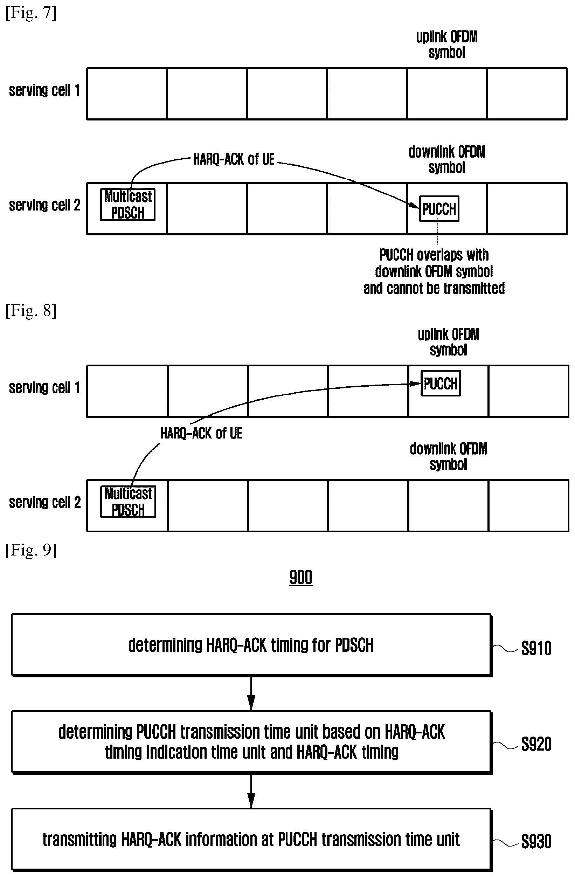

Fig.7 illustrates a schematic diagram of a situation where the HARQ-ACK for PDSCH cannot be transmitted.

As shown in Figure 7, if the HARQ-ACKs for the multicast PDSCH by the different UEs are transmitted in different serving cells, it is difficult for the base station to ensure that the indicated PUCCHs for transmitting the multicast HARQ-ACK are all located in the uplink OFDM symbols when uplink/downlink configurations of the different serving cells are different, therefore it is possible that the indicated PUCCH resource for some UEs is in the uplink OFDM symbol, while the same OFDM symbol is the downlink OFDM symbol for other UEs. Therefore, the HARQ-ACK for the multicast PDSCH for these UEs cannot be transmitted on the indicated PUCCH resource.

The embodiments of the present disclosure can solve the above-mentioned problems. In one embodiment of the present disclosure, the uplink serving cell or uplink carrier transmitting the HARQ-ACK information for the PDSCH is the configured uplink serving cell or configured uplink carrier.

Fig.8 illustrates a schematic diagram of another method for transmitting HARQ-ACK of PDSCH according to an embodiment of the present disclosure.

For the UE receiving the PDSCH, in the case of uplink CA, the HARQ-ACK for PDSCH of the UE is transmitted on the configured uplink serving cell.

According to the embodiment of the present disclosure, the uplink serving cell or uplink carrier for transmitting the HARQ-ACK for PDSCH may be determined according to an explicit indication or an implicit indication.

For example, as an example of explicit indication, the UE may receive independent signaling (including a higher layer signaling configuration, a media access layer signaling indication, and a physical layer signaling indication, the physical layer signaling refers to an information indication in DCI) to determine the uplink serving cell or uplink carrier for transmitting the HARQ-ACK for PDSCH, for example, the UE determines that the UE transmits the HARQ-ACK for PDSCH on the uplink serving cell 1 by receiving the higher layer signaling configuration.

Alternatively, as an example of the implicit indication, the UE may determine the uplink serving cell or uplink carrier transmitting the HARQ-ACK for PDSCH through an implicit signaling. For example, the uplink serving cell transmitting HARQ-ACK for PDSCH may be an uplink serving cell corresponding to the downlink serving cell transmitting PDSCH.

For example, when the PDSCH is transmitted in a time division multiplexing (TDD) cell, the uplink serving cell transmitting the HARQ-ACK for PDSCH and the downlink serving cell transmitting PDSCH are on the same carrier, and the time division multiplexing may also be referred to as unpaired spectrum; when the PDSCH is transmitted in a frequency division multiplexing (FDD) cell, the uplink serving cell transmitting the HARQ-ACK for PDSCH and the downlink serving cell transmitting PDSCH is FDD, a pair of carriers, and the frequency division multiplexing may also be referred to as paired spectrum.

This method is advantageous in that a HARQ-ACK timing indication method of the PDSCH is simple. In addition, the base station would not allow the PUCCH transmitting HARQ-ACK indicated by the timing to be located in the downlink OFDM symbol, as shown in Fig.8.

In addition, the UE may determine the uplink serving cell or uplink carrier transmitting the HARQ-ACK information for the multicast PDSCH with one of the above two methods, which is determined by receiving signaling (including higher layer signaling configuration, media access layer signaling indication, and physical layer signaling indication, physical layer signaling refers to the information indication in DCI).

A HARQ-ACK timing for the unicast PDSCH transmission refers to a time slot length corresponding to a SCS configuration for the PUCCH. However, in the case of the multicast PDSCH, when the serving cells of the PUCCH transmitting the HARQ-ACK for the multicast PDSCH by UEs are different serving cells, the subcarrier spacing (SCS) configurations of the uplink serving cells for the different UEs to transmit the HARQ-ACKs may be same or different. When the SCS configurations of the uplink serving cells for the different UEs to transmit the HARQ-ACKs are different, the time slot lengths are also different. Table 1 exemplarily shows a correspondence between the SCS configuration and the time slot length.

Therefore, according to the embodiment of the present disclosure, when transmitting the HARQ-ACK for PDSCH, for example, in step S540, it is further required to determine the HARQ-ACK timing for the PDSCH, where the HARQ-ACK timing refers to a time correspondence between the PDSCH and the PUCCH transmitting the HARQ-ACK information for the PDSCH, the time correspondence is called as PDSCH-to-HARQ_feedback timing. For example, the PDSCH is transmitted at time unit n, and the PUCCH transmitting the HARQ-ACK for PDSCH is transmitted at time unit n+k1, and k1 is referred to as the timing of the HARQ-ACK for PDSCH.

At this time, a HARQ-ACK timing indication time unit needs to be configured to indicate the HARQ-ACK timing k1 for the UE receiving the PDSCH.

**[Table 1]**

| Corresponding table for subcarrier spacing configuration (µ) and the number of slots in each subframe | | |
|---|---|---|
| subcarrier spacing configuration (µ) | subcarrier width Δ*f* = 2*^{µ}*·15[kHz] | number of slots in each subframe |
| 0 | 15 | 1 |
| 1 | 30 | 2 |
| 2 | 60 | 4 |
| 3 | 120 | 8 |
| 4 | 240 | 16 |

Hereinafter, the determination of the HARQ-ACK timing will be described in detail with reference to the drawings.

Fig.9 illustrates an exemplary flowchart of a method 900 for transmitting HARQ-ACK information for PDSCH according to an embodiment of the present disclosure. The method 900 may be implemented at the UE side. The method 900 may be included in step S540 in Fig.5.

As shown in Fig.9, at step S910 of the method 900, the HARQ-ACK timing for PDSCH is determined.

At step S920, the PUCCH transmission time unit is determined based on the HARQ-ACK timing indication time unit and the HARQ-ACK timing.

At step S930, the HARQ-ACK information is transmitted at the PUCCH transmission time unit.

In step S910, the UE may determine the HARQ-ACK timing indication time unit of the UE through the explicit signaling or the implicit signaling. For example, as an example of the explicit signaling, the UE may determine the HARQ-ACK timing indication time unit by receiving a higher layer signaling configuration. As an example of the implicit signaling, the UE may also use its own time slot length of PUCCH transmitting the HARQ-ACK as the HARQ-ACK timing indication time unit.

Then, in step S920, a value of the HARQ-ACK timing, that is, the value of k1, may be indicated by the timing indication field in the DCI for scheduling the PDSCH.

The HARQ-ACK timing indication time unit of the UE that transmits HARQ-ACK in the serving cells with different subcarrier spacing configuration is different.

Then, in step S930, the time unit of PUCCH transmitting the HARQ-ACK may be determined based on the HARQ-ACK timing indication time unit and the value of k1. For example, in the case of the implicit signaling, the time slot length of the PUCCH transmitting the HARQ-ACK by the UE is 1 ms, that is, the HARQ-ACK timing indication time unit is 1 ms, and if k1 is 2, which is indicated by the timing indication field in the DCI, the UE transmits PUCCH of the HARQ-ACK in n+2 ms. For another example, the time slot length of the PUCCH transmitting the HARQ-ACK by the UE is 0.5 ms, that is, the HARQ-ACK timing indication time unit is 0.5 ms, and if k1 is 2, which is indicated by the timing indication field in the DCI, the UE transmits PUCCH of the HARQ-ACK in n+2*0.5 ms.

With this method, there is no need for an additional processing scheme for the case that the HARQ-ACK timing indication time unit is different from the time unit for transmitting PUCCH of the HARQ-ACK.

In addition, for the UE receiving the PDSCH, a set of k1, that is, the set of HARQ-ACK timings, may be determined for the UE, for example, through an independent higher layer signaling configuration.

In addition, in step S910, the HARQ-ACK timing may be determined based on the timing indication field in the DCI and the set of the HARQ-ACK timing.

For example, the UE uses the time slot length with the SCS configuration (µ) of 0 as the HARQ-ACK timing indication time unit, and the set of k1 is {a1, a2, a3, a4}, or the UE uses the time slot length with the SCS configuration of 1 as the HARQ-ACK timing indication time unit, and the set of k1 is {b1, b2, b3, b4}. Or the UE uses the time slot length with the SCS configuration of 0 as the HARQ-ACK timing indication time unit, and the set of k1 is {c1,c2,c3,c4}, where a1, a2, a3, a4, b1, b2, b3, b4, c1, c2, c3, and c4 are non-negative integers, which may be determined by a higher layer signaling configuration.

In this case, according to the embodiment of the present disclosure, in step S920, the HARQ-ACK timing indication may be received, which is used to determine the HARQ-ACK timing for the UE from the set of HARQ-ACK timings of the UE, that is, the set of k1.

Here, the set of the HARQ-ACK timings may be a set corresponding to the multicast PDSCH.

Table 2 exemplarily shows one k1 field indication value in the DCI for scheduling the multicast PDSCH. For different UEs receiving the multicast PDSCH, the same value of k1 may indicate different and/or the same HARQ-ACK timing. The example in Table 2 shows the k1 field indication value and the HARQ-ACK timing value of klof each UE when different UEs or UE groups use different HARQ-ACK timing indication time units and/or the same HARQ-ACK timing indication time units, where a UE-1 uses the time slot length with SCS configuration of 0 as the HARQ-ACK timing indication time unit, and a UE-2 and a UE-3 use the time slot length with SCS configuration of 1 as the HARQ-ACK timing indication time unit, where the specific values in Table 2 are only examples, and the embodiment of the present disclosure is not limited to this.

**[Table 2]**

| Correspondence table of k1 field indication value and timing of different UEs | | | |
|---|---|---|---|
| k1 field indication value | UE-1 (µ=0) value of HARQ-ACK timing k1 | UE-2 (µ=1) value of HARQ-ACK timing k1 | UE-3 (µ=1) value of HARQ-ACK timing k1 |
| 00 | 1 | 1 | 2 |
| 01 | 2 | 3 | 4 |
| 10 | 3 | 5 | 6 |
| 11 | 4 | 7 | 8 |

This method is advantageous in that a flexibility of the HARQ-ACK timing is ensured, and it can ensure that UEs transmitting HARQ-ACK by the PUCCHs with different subcarrier spacing configurations can obtain approximate delay requirements. In addition, the HARQ-ACKs of the different UEs may be dispersed in different time units by configuring different sets of k1 for the different UEs. Also, PUCCH resources indicated by using one k1 field indication value are available for all UEs, by reasonably determining the sets of k1 for different UEs.

In addition, for UEs that receive both multicast PDSCH and unicast PDSCH at the same time, the HARQ-ACK timing indication time unit for the multicast PDSCH may use the HARQ-ACK timing indication time unit for the unicast PDSCH, and the set of k1 of the HARQ-ACK timing indication time unit for the multicast PDSCH and the set of k1 of the HARQ-ACK timing indication time unit for the unicast PDSCH may be independently configured and determined. For example, for the UE, the set of k1 of HARQ-ACK for the multicast PDSCH is {a1, a2, a3, a4}, and the set of k1 of HARQ-ACK for the unicast PDSCH is {d1, d2, d3, d4}, d1, d2, d3, d4 are non-negative integers, which can be determined through higher layer signaling configuration.

In addition, the set of k1 of HARQ-ACK for the multicast PDSCH may also be the set of k1 of HARQ-ACK for the unicast PDSCH.

This method is advantageous in that fewer timing indication fields are used, and the flexibility of the HARQ-ACK timing is ensured.

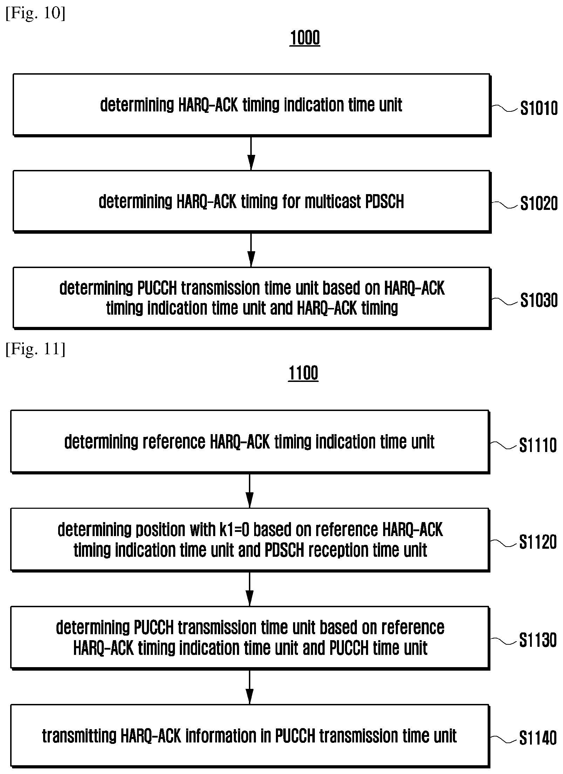

Fig.10 illustrates an exemplary flowchart of a method 1000 for transmitting HARQ-ACK information for PDSCH according to an embodiment of the present disclosure. The method 1000 may be implemented at the UE side. The method 1000 may be included in step S540 in Fig.5.

As shown in Fig.10, at step S1010 of the method 1000, the HARQ-ACK timing indication time unit is determined.

In an example, the HARQ-ACK timing indication time unit may correspond to a PUCCH subcarrier width/space.

At step S1020, the HARQ-ACK timing for PDSCH is determined.

At step S1030, a PUCCH transmission time unit is determined based on the HARQ-ACK timing indication time unit and the HARQ-ACK timing.

Determining the HARQ-ACK timing indication time unit in step S1010 is similar to determining the HARQ-ACK timing indication time unit in step S910, except that in step S1010, the determined HARQ-ACK timing indication time unit corresponds to the uplink serving cell or uplink carrier of the physical uplink control channel (PUCCH) transmitting the HARQ-ACK information for PDSCH, or the determined HARQ-ACK timing indication time unit corresponds to the subcarrier spacing (SCS) of the PUCCH transmitting the HARQ-ACK information for PDSCH.

Therefore, according to the embodiment of the present disclosure, for at least one UE whose physical uplink control channel (PUCCH) transmitting the HARQ-ACK information for the multicast PDSCH is in the same uplink serving cell or the same uplink carrier, the same HARQ-ACK timing indication time unit may be determined, or, for at least one UE with the same subcarrier spacing (SCS) of PUCCH transmitting the HARQ-ACK information for the multicast PDSCH, the same HARQ-ACK timing indication time unit may be determined.

For example, the time slot length of the PUCCH transmitting the HARQ-ACK may be used as the HARQ-ACK timing indication time unit.

Alternatively, when the UE may transmit the HARQ-ACK information in multiple serving cells or bandwidth parts, the time slot length of the subcarrier spacing configuration (SCS) of the primary cell (Pcell) may be used as the HARQ-ACK timing indication time unit, namely the time slot length of the subcarrier spacing configuration (SCS) of the primary cell (Pcell) is used as a reference HARQ-ACK timing indication time unit, so as to ensure that the base station and the UE may not confuse on HARQ-ACK timing indication time unit during reconfiguration.

Alternatively, when the UE may transmit the HARQ-ACK information on the PUCCHs in multiple serving cells or bandwidth parts, the HARQ-ACK timing indication time unit may be determined as the longest time slot length among at least one of the time slot lengths of the subcarrier spacing configurations (SCSs) of PUCCHs transmitting the HARQ-ACK, which are configured for the UE. With is method, the implementation may be easier.

Alternatively, when the UE may transmit the HARQ-ACK information on the PUCCHs in multiple serving cells or bandwidth parts, the HARQ-ACK timing indication time unit may be determined as the shortest time slot length among at least one of the time slot lengths of the subcarrier spacing configurations (SCSs) of PUCCHs transmitting the HARQ-ACK, which are configured for the UE. With is method, the PUCCH resource can be indicated more exactly.

In step S1020, the DCI for scheduling the PDSCH may include more than one timing indication field to indicate the timing k1 of the HARQ-ACK for PDSCH, and the UE may determine the HARQ-ACK timing according to the relationship indication field of the signaling indication (for example, the higher layer signaling configuration indication).

Therefore, according to the embodiment of the present disclosure, the HARQ-ACK timing for PDSCH may be determined according to a signaling or be preset, and a number of timing indication fields included in the downlink control information (DCI) for scheduling the PDSCH may be one or more, which is used to indicate the HARQ-ACK timing of at least one UE, respectively.

For example, there are M timing indication fields in the DCI for scheduling multicast PDSCH, M is a positive integer, and each of the timing indication fields is used to indicate the HARQ-ACK timing for at least one UE, respectively. Also, the HARQ-ACK timing of each timing indication field is independently configured and may be same or different. That is, each timing indication field indicates one timing among multiple HARQ-ACK timings configured by a higher layer signaling, and the UE determines the HARQ-ACK timing according to the indicated timing indication field.

Step S1030 is similar to step S930, and may not be repeated here.

In one embodiment of the present disclosure, for each user equipment (UE), a reference HARQ-ACK timing indication time unit is configured.

Fig.11 illustrates an exemplary flowchart of a method 1100 for determining to transmit the HARQ-ACK information for PDSCH according to an embodiment of the present disclosure. The method 1100 may be implemented at the UE side. The method 1100 may be included in step S540 in Fig.5.

As shown in Fig.11, at step S1110 of the method 1100, a reference HARQ-ACK timing indication time unit is determined.

At step S1120, the position with k1=0 is determined based on the reference HARQ-ACK timing indication time unit and a PDSCH reception time unit.

At step S1130, the PUCCH transmission time unit is determined based on the reference HARQ-ACK timing indication time unit and a PUCCH time unit.

At step S1140, the HARQ-ACK information is transmitted in the PUCCH transmission time unit.

Wherein, k1 is the HARQ-ACK timing, and the position with k1 being 0 is the HARQ-ACK timing reference point.

For example, the PDSCH is transmitted at time unit n, and the PUCCH transmitting the HARQ-ACK for PDSCH is transmitted at time unit n+k1, k1 is the timing of HARQ-ACK for PDSCH, both n and k1 use the reference HARQ-ACK timing indication time unit as a time unit.

For example, for the multicast PDSCH, the multicast PDSCH is scheduled by one DCI, when there is only one HARQ-ACK timing indication field in the DCI, this indication field is referred as PDSCH-to-HARQ_feedback timing indication field.

The determination of the HARQ-ACK timing of the UE is as follows.

For the UE, a reference HARQ-ACK timing indication time unit (Time unit, also referred to as Time granularity) may be configured, and the reference HARQ-ACK timing indication time unit of the UE may be indicated by the explicit or implicit indication.

In step S1110, as an example of the explicit indication, the UE may obtain the reference HARQ-ACK timing indication time unit by receiving a higher layer signaling configuration, or the reference HARQ-ACK timing indication time unit is preset.

For example, the time slot length with the SCS configuration of 0 (here, the time slot length is taken as an example for illustration, or orthogonal frequency division multiplexing (OFDM) symbol length may be used as the time unit) is used as the reference HARQ-ACK timing indication time unit of the UE by preset, that is, the reference HARQ-ACK timing indication time unit of the UE is 1 ms. At this time, regardless of whether the SCS for the PUCCH transmitting the HARQ-ACK by the UE and the reference HARQ-ACK timing indication time unit of the UE are the same or not, the HARQ-ACK timing of the UE takes the reference HARQ-ACK timing indication time unit of the UE as an indication time unit.

For example, if the SCS configuration for PUCCH transmitting the HARQ-ACK for the multicast PDSCH by the UE is 1, and the reference HARQ-ACK timing indication time unit configured for the UE is the time slot length of the SCS configuration of 0, then the HARQ-ACK timing indication time unit of the UE is the time slot length of the SCS configuration of 0.

Alternatively, the reference HARQ-ACK timing indication time unit of the UE may be the time slot length configured by the SCS of the multicast PDSCH.

As an example of the implicit indication, the reference HARQ-ACK timing indication time unit of the UE may be the time slot length configured by the SCS of PDCCH scheduling PDSCH.

This method is advantageous in that the UE uses a unified reference HARQ-ACK timing indication time unit, and may indicate the HARQ-ACK timing for multiple UEs in different uplink serving cells through one timing indication field. In addition, all UEs may feedback the HARQ-ACK for PDSCH in time.

Assuming that the time slot length of the PUCCH transmitting the HARQ-ACK is A, the time slot length of the multicast PDSCH resulting in the HARQ-ACK is B, and the time slot length of the reference HARQ-ACK timing indication time unit is C, then the HARQ-ACK timing indication time unit is the time slot length C of the reference HARQ-ACK timing indication time unit.

In addition, the configuration of the time slot length C of the reference HARQ-ACK timing indication time unit may also be restricted by preset. For example, C may be restricted to be less than or equal to A. At this time, one reference HARQ-ACK timing indication time unit may only overlap with one PUCCH time slot length, and PUCCH may be transmitted in any time slot. Of course, the embodiment of the present disclosure is not limited to this.

In step S1120, the position with k1=0 is determined based on the reference HARQ-ACK timing indication time unit C and PDSCH time unit B. The different relationships between the reference HARQ-ACK timing indication time unit and the PDSCH time unit will be described in detail below. Here, the relationship between the reference HARQ-ACK timing indication time unit and the PDSCH time unit refers to the relationship between a length of the reference HARQ-ACK timing indication time unit and a length of the PDSCH time unit.

When the PDSCH reception time unit B and the reference HARQ-ACK timing indication time unit C is the same, that is, B=C, the position with k1 being 0 for transmitting HARQ-ACK overlaps with the PDSCH reception time unit in time.

When the PDSCH reception time unit B is smaller than the reference HARQ-ACK timing indication time unit C, that is, B<C, the PDSCH reception time unit only overlaps with one reference HARQ-ACK timing indication time unit, the position with k1 being 0 for transmitting HARQ-ACK overlaps with the PDSCH reception time unit in time.

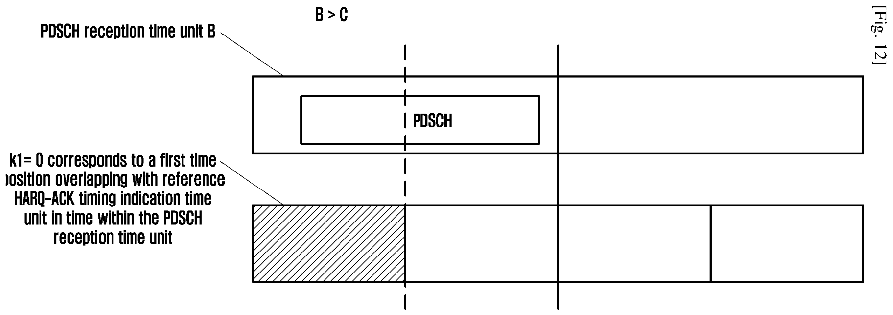

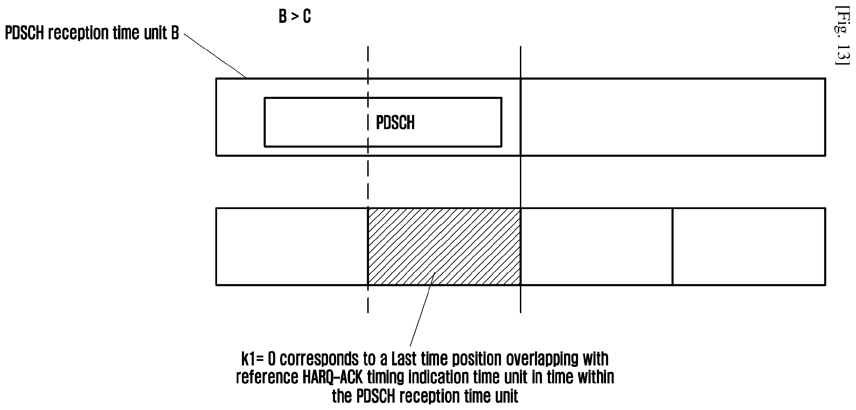

Figs.12 and 13 illustrate schematic diagrams of determining the position of the HARQ-ACK timing reference point k1=0 according to an embodiment of the present disclosure.

When the PDSCH reception time unit B is greater than the reference HARQ-ACK timing indication time unit, that is, B>C, the position with k1 being 0 for transmitting HARQ-ACK overlaps with a period with a length of one reference HARQ-ACK timing indication time unit within the PDSCH reception time unit in time. Because B>C, the PDSCH reception time unit overlaps with multiple reference HARQ-ACK timing indication time units, and one time unit may be determined from the multiple reference HARQ-ACK timing indication time units that overlap with the PDSCH reception time unit as the position with k1 being 0 for transmitting HARQ-ACK. For example, it can be indicated by preset determination or higher layer signaling configuration.

For example, the position with k1 being 0 overlapping with a period with a length of one reference HARQ-ACK timing indication time unit within the PDSCH reception time unit in time comprises: the position with k1 being 0 overlaps with a period with a length of the first reference HARQ-ACK timing indication time unit within the PDSCH reception time unit in time, as shown in Fig.12, or the position with k1 being 0 overlaps with a period with a length of the last reference HARQ-ACK timing indication time unit within the PDSCH reception time unit in time, as shown in Fig.13.

With this method, the position with k1 being 0 for transmitting HARQ-ACK overlapping with the last PDSCH reception time unit with the same length as the reference HARQ-ACK timing indication time unit within the PDSCH reception time unit in time can ensure that the UE finishes the PDSCH processing within the PDSCH processing time.

In step S1130, the PUCCH transmission time unit is determined based on the reference HARQ-ACK timing indication time unit and the PUCCH time unit. Thereafter, detailed descriptions would be made according to the different relationships between the reference HARQ-ACK timing indication time unit C and PUCCH time unit A. Here, the relationship between the reference HARQ-ACK timing indication time unit and the PUCCH time unit refers to the relationship between the length of the reference HARQ-ACK timing indication time unit and the length of the PUCCH time unit.

First, the position of k1 is determined based on the position with k1 being 0.

When the PUCCH time unit A is equal to the reference HARQ-ACK timing indication time unit C, that is, when A=C, one reference HARQ-ACK timing indication time unit overlaps with one PUCCH time unit, so the transmission time unit (for example, a time slot) of PUCCH for HARQ-ACK overlaps with the position of k1 in time.

When the PUCCH time unit A is greater than the reference HARQ-ACK timing indication time unit C, that is, A>C, one reference HARQ-ACK timing indication time unit overlaps with one PUCCH time unit, so the transmission time unit (for example, a time slot) of PUCCH for HARQ-ACK overlaps with the position of k1 in time.

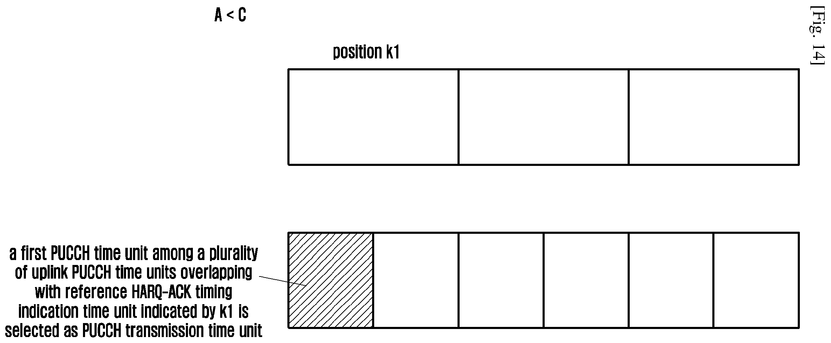

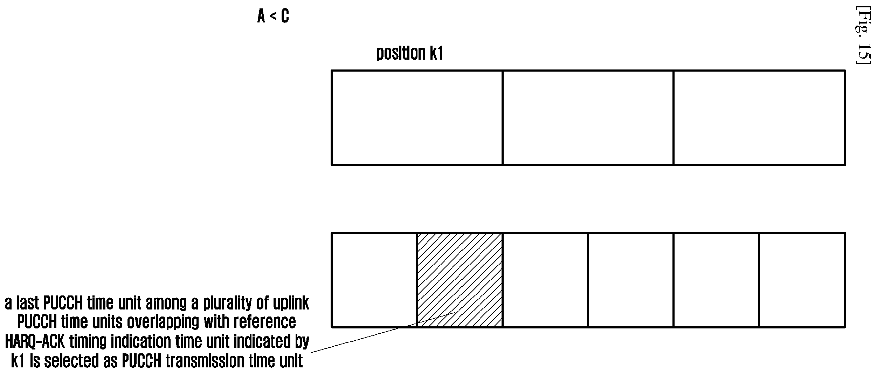

Figs.14 and 15 illustrate schematic diagrams of determining PUCCH transmission time unit according to an embodiment of the present disclosure

When the PUCCH time unit A is smaller than the reference HARQ-ACK timing indication time unit C, that is, A<C, the PUCCH transmission time unit overlaps with the period with a length of one PUCCH time unit within the position k1 in time.

At this time, one reference HARQ-ACK timing indication time unit overlaps with multiple PUCCH time units, and one PUCCH time unit may be determined as the PUCCH transmission time unit, from the multiple PUCCH time units (the number may be 2, 4, etc., and 2 is used as an example below for description) overlapped with the reference HARQ-ACK timing indication time unit. For example, it may be indicated by preset determination or higher layer signaling configuration.

For example, the PUCCH transmission time unit overlaps with the period with the length of the first PUCCH time unit within the position k1 in time. For example, a first PUCCH time unit among the multiple (the number may be 2, 4, etc., and 2 is used as an example below for description) uplink PUCCH time units (alternatively, the uplink PUCCH time unit may be replaced of the PUCCH time unit containing the available PUCCH transmission resources) that overlap with the reference HARQ-ACK timing indication time unit indicated by k1 is selected as the PUCCH transmission time unit, as shown in Fig.14. Using this method can ensure that HARQ-ACK is transmitted in the uplink time unit, and the HARQ-ACK information is transmitted as early as possible to ensure the delay requirement.

Alternatively, the PUCCH transmission time unit overlaps with the period with the length of the last PUCCH time unit within the position k1 in time. For example, a last PUCCH time unit among the multiple (the number may be 2, 4, etc., and 2 is used as an example below for description) uplink PUCCH time units (alternatively, the uplink PUCCH time unit may be replaced of the PUCCH time unit containing the available PUCCH transmission resources) that overlap with the reference HARQ-ACK timing indication time unit indicated by k1 is selected as the PUCCH transmission time unit, as shown in Fig.15.

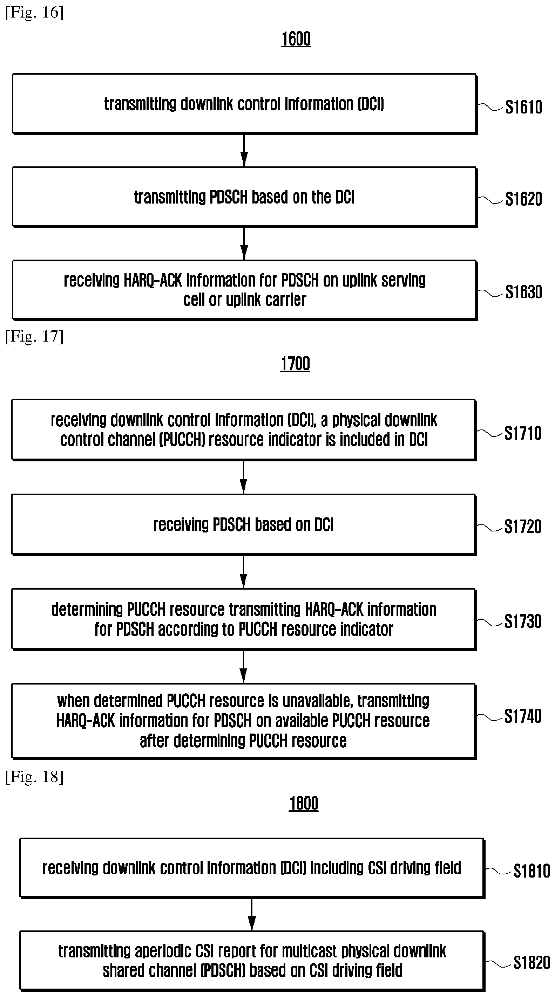

Fig.16 illustrates an exemplary flow chart of a method 1600 for receiving hybrid automatic retransmission request acknowledgement (HARQ-ACK) information according to an embodiment of the present disclosure. The method 1600 may be implemented at the base station side.

As shown in Fig.16, at step S1610 of the method 1600, downlink control information (DCI) is transmitted.

At step S1620, PDSCH is transmitted based on the DCI.

At step S1630, HARQ-ACK information for PDSCH is received on the uplink serving cell or the uplink carrier.

Therefore, according to the embodiment of the present disclosure, the serving cell or carrier for transmitting the HARQ-ACK for PDSCH may be determined, and the HARQ-ACK information for PDSCH may be received on the determined serving cell or carrier.

A configuration message may be transmitted, including the uplink serving cell or uplink carrier configured for the HARQ-ACK information for the multicast PDSCH.

In an example, the k1 field indication value in the downlink control information (DCI) transmitted by the base station uses the set of k1 of each UE or UE group shown in Table 2 to select the value of timing k1 of each UE, and then one k1 field indication value is used to indicate the t value of timing relationshipk1 for at least one UE. For example, the base station determines that the value of timing k1 of a UE-1 is 2, and the UE-1 uses the time slot length with SCS configuration of 0 as the HARQ-ACK timing indication time unit. The value of timing k1 of a UE-2 is 3, the UE-1 uses the time slot length with SCS configuration of 1 as the HARQ-ACK timing indication time unit. The value of timing k1 of the UE-3 is 4, the UE-3 used the time slot length with the SCS configuration (µ) of 1 as the HARQ-ACK timing indication time unit, and then it indicates to the UE-1, the UE-2, and the UE-3 by the k1 field indication value of 01.

In an example, the configuration message may indicate that the uplink serving cell or uplink carrier for transmitting the HARQ-ACK information for the multicast PDSCH is the uplink serving cell or the uplink carrier for transmitting the HARQ-ACK information for the unicast PDSCH.

For example, a UE-1 transmits the HARQ-ACK for the received unicast PDSCH on the uplink serving cell 1, and the UE-1 also transmits the HARQ-ACK for the received multicast PDSCH on the uplink serving cell 1, while a UE-2 transmits the HARQ-ACK for the received unicast PDSCH on the uplink serving cell 2, and the UE-2 also transmits the HARQ-ACK for the received multicast PDSCH on the uplink serving cell 2.

Therefore, all UEs or UE groups receiving PDSCH may transmit HARQ-ACK information in a shared uplink serving cell or uplink carrier.

In an example, the HARQ-ACK timing may be indicated in the timing indication field in the DCI for scheduling the multicast PDSCH.

The timing indication field is one timing indication field in the DCI, where the DCI includes at least one timing indication field for indicating at least one HARQ-ACK timing respectively.

When the UE has a set of HARQ-ACK timings, the timing indication field may be used to indicate the HARQ-ACK timing in the set of HARQ-ACK timings. The set of HARQ-ACK timings is a set corresponding to the multicast PDSCH.

For example, there are 3 UEs receiving multicast PDSCH, a UE-1, a UE-2, a UE-3, the SCS configuration of PUCCH of HARQ-ACK transmitted by the UE-1 and the UE-2 is 0, the SCS configuration of PUCCH of HARQ-ACK transmitted by the UE-3 is 1, and there are two HARQ-ACK timing indication fields in the DCI for scheduling multicast PDSCH. The first HARQ-ACK timing indication field uses the time slot length with the SCS configuration of 0 as the time unit to indicate the HARQ-ACK timing for the UE-1 and the UE2, and the second HARQ-ACK timing indication field uses the time slot length with the SCS configuration of 1 as the time unit to indicate the HARQ-ACK timing for the UE-3.

In addition, the DCI may further include a reference HARQ-ACK timing indication time unit.

Fig.17 illustrates an exemplary flowchart of a method 1700 for transmitting HARQ-ACK of PDSCH according to an embodiment of the present disclosure PUCCH resource conflict resolution. The method 1700 may be implemented at the UE side.

As shown in Fig.17, at step S1710 of the method 1700, downlink control information (DCI) is received, a physical downlink control channel (PUCCH) resource indicator is included in the DCI.

At step S1720, PDSCH is received based on the DCI.

At step S1730, a PUCCH resource transmitting the HARQ-ACK information for PDSCH is determined according to the PUCCH resource indicator.

At step S1740, when the determined PUCCH resource is unavailable, the HARQ-ACK information for PDSCH is transmitted on an available PUCCH resource after the determined PUCCH resource.

According to the embodiment of the present disclosure, the available PUCCH resource after the determined PUCCH resource is the first available resource among the available PUCCH resources after the determined PUCCH resource.

The PDSCH may be a semi-persistent Scheduling (SPS) PDSCH, or alternatively, the PDSCH may be a PDSCH scheduled by DCI.

One DCI is required to indicate PUCCH resources for multiple UEs, and a distribution of uplink and downlink time slots of the serving cell for the different UEs to transmit the HARQ-ACKs may be different, therefore for UEs, the indicated PUCCH resources may be in unavailable time units (for example, the indicated PUCCH resource for transmitting HARQ-ACK is included in the downlink OFDM symbol), the PUCCH transmitting HARQ-ACK may be delayed to the available time unit. However, in order to ensure the HARQ-ACK delay requirement, HARQ-ACK cannot be delayed indefinitely, so a preset value of available PUCCH resources for transmitting HARQ-ACK may be determined, that is, a maximum delay time, which may be a maximum time interval between the determined time unit of PUCCH transmitting the HARQ-ACK and the time unit of the first available PUCCH resource among the delayed available PUCCH resource for transmitting HARQ-ACK.

If there is only one serving cell for transmitting PUCCH, a time unit of the maximum delay time may be the slot length of the PUCCH transmitting the HARQ-ACK. If there is more than more serving cells for transmitting PUCCH and at least two serving cells have different SCS configurations, the time unit of the maximum delay time may be the slot length of the transmitting PUCCH in the Pcell (Pcell). With this method, it may avoid misunderstanding of the time unit of the maximum delay time between the base station and the UE as reconfiguration. The time unit of the maximum delay time may be the longest time slot among the time slots of the transmitting PUCCHs in the at least two serving cells configured for the UE to transmit the HARQ-ACK, and with this method, it may avoid the maximum delay time to end at middle of a time slot. Alternatively, the time unit of the maximum delay time may be the shortest time slot among the time slots of the transmitting PUCCHs in the at least two serving cells configured for the UE to transmit the HARQ-ACK, and with this method, it may determine the maximum delay time more exactly. The time unit of the maximum delay time may be the time slot length of the preset SCS configuration, and this method is advantageous in that the time unit of the maximum delay time is not required to be changed depending on the SCSs of the different serving cells.

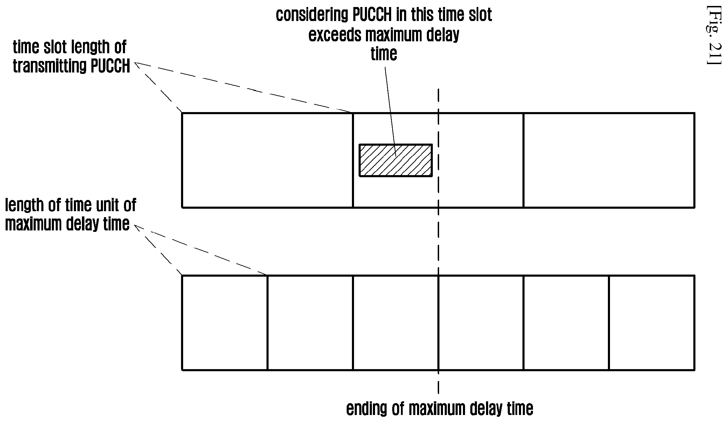

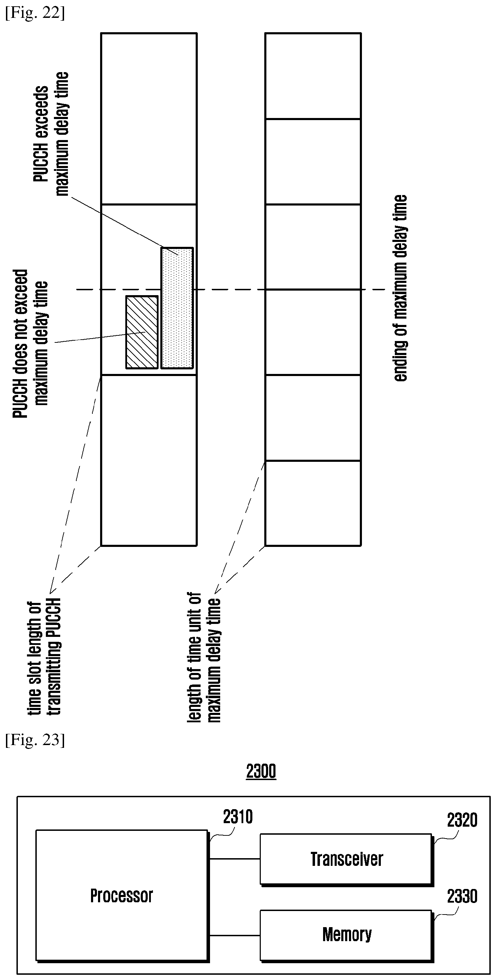

When the length of the time unit of the maximum delay time is less than the time slot length of the transmitting PUSCCH, if the maximum delay time ends in a time slot of the transmitting PUCCH, then as one method, if the time slot of the transmitting PUCCH ends later than an end of the maximum delay time, it may consider that the PUCCH has been outside the maximum delay time and the HARQ-ACK for PDSCH could not be delayed to be transmitted on this PUCCH, as illustrated in Fig. 21. This method is advantageous in that the implementation is simple. As another method, if the last OPDM symbol of the transmitting PUCCH ends later than the maximum delay time, it may consider that the PUCCH has been outside the maximum delay time and the HARQ-ACK for PDSCH could not be delayed being transmitted on this PUCCH, as illustrated in Fig. 22. This method is advantageous in that an opportunity for transmitting the HARQ-ACK is enhanced as much as possible.

The time interval between the first available resource among the available PUCCH resources after the determined PUCCH resource and the determined PUCCH resource does not exceed the preset value.

If the time interval between the delayed available time unit of the PUCCH for transmitting HARQ-ACK and the determined time unit of PUCCH for transmitting the HARQ-ACK is greater than the preset value, the transmission of PUCCH for HARQ-ACK is canceled; if the time interval between the delayed available time unit of the PUCCH for transmitting HARQ-ACK and the determined time unit of PUCCH for transmitting the HARQ-ACK does not exceed a threshold T, the PUCCH for transmitting the HARQ-ACK is transmitted in the delayed PUCCH time unit.

This method is advantageous in that the transmission of the HARQ-ACK for PDSCH, for example, the transmission of the HARQ-ACK for the multicast PDSCH, would be canceled as less as possible, which ensures the performance of PDSCH. The preset value may be determined by receiving higher-layer signaling configuration.

According to the embodiment of the present disclosure, according to a signaling indication or a received signal strength of the user equipment (UE), the HARQ-ACK information for PDSCH transmitted in step S1740 may include one of the followings.

When the PDSCH is not decoded correctly, a NACK is fed back on the determined PUCCH resource;
When the PDSCH is decoded correctly, an ACK is fed back on the determined PUCCH resource, and when the PDSCH is not decoded correctly, the NACK is fed back on the determined PUCCH; and
Neither ACK nor NACK is fedback.

The UE may determine whether to feedback HARQ-ACK by receiving signaling (including higher-layer signaling configuration, media access layer signaling indication, and physical layer signaling indication) transmitted by the base station or according to presets.

The UE may also determine whether to feedback HARQ-ACK based on the received signal strength. For example, a signal strength threshold (Threshold-1) may be defined. If a RSRP measured by the UE is less than Threshold-1, the UE may feedback HARQ-ACK, otherwise the UE may not feedback HARQ-ACK. This can save transmission power of the UE.

In an example, if the UE decodes the PDSCH correctly, the UE does not feedback the HARQ-ACK information, and if the UE receives the PDCCH but does not decode the PDSCH correctly, the UE feeds back NACK on the PUCCH resource.

In an example, if the UE decodes the PDSCH correctly, the UE feeds back ACK, and if the UE does not decode the PDSCH correctly, the UE feeds back NACK.

In an example, the UE does not feedback HARQ-ACK, that is, feeds back neither ACK nor NACK.

The UE receiving PDSCH is far or close to the base station, the signal quality received by the UE far away from the base station is poor, the signal quality received by the UE close to the base station is good, and the signal received by the UE not far away from the base station is average. Multicast PDSCH uses the determined coding and modulation mode, and PDCCH for scheduling multicast PDSCH is at a certain aggregation level (AL). At this time, the signal quality received by the UE close to the base station is good, and the PDCCH detection error probability and the PDSCH decoding error probability is extremely low; the signal received by the UE not far away from the base station is average, the PDCCH detection error probability is low, and there is a certain probability for the PDSCH decoding error probability; the signal quality received by the UE far away from the base station is poor, there is a certain error probability in PDCCH detection and PDSCH decoding.

For the UE that only transmits NACK, if the UE misses the PDCCH, the UE does not feedback NACK. At this time, if other UEs do not feedback NACK, the base station may consider that the decoding of the multicast PDSCH of all UEs is correct, so the PDSCH is no longer retransmitted, so that the UE that misses the PDCCH has no chance to receive the data again, or the data may be received only through higher-layer retransmission.

If the UE transmits both ACK and NACK, when the UE misses PDCCH detection, the UE may not transmit HARQ-ACK, and the base station can blindly check whether the UE feeds back HARQ-ACK on the PUCCH resource on which the UE feeds back HARQ-ACK, if the base station does not detect the HARQ-ACK of the UE, the base station knows that the UE missed the PDCCH scheduling the multicast PDSCH, the base station may retransmit the PDSCH, and the UE may also receive the retransmission of the PDSCH.

The determined PUCCH resource may overlap with another PUCCH resource in time, at this time, the HARQ-ACK information for PDSCH transmitted in step S1740 may further include one of the followings:
a multiplexed HARQ-ACK information is transmitted on the determined PUCCH resource; and
the HARQ-ACK information for PDSCH is transmitted according to a priority of the HARQ-ACK information.

For example, when the UE may receive both multicast PDSCH and unicast PDSCH, the PUCCH resource for transmitting the HARQ-ACK for the multicast PDSCH may overlap with the PUCCH resource of the HARQ-ACK for transmitting the unicast PDSCH.

When the PUCCH resource for transmitting the HARQ-ACK for the multicast PDSCH and the PUCCH resource for the HARQ-ACK for the unicast PDSCH overlap in time, the HARQ-ACK for the multicast PDSCH and the HARQ-ACK for the unicast PDSCH may be multiplexed, the PUCCH resource of the HARQ-ACK for the unicast PDSCH is used to transmit the HARQ-ACK for the multiplexed multicast PDSCH. The PUCCH resource of the HARQ-ACK for the unicast PDSCH is the PUCCH resource indicated by the PRI in the DCI for scheduling unicast PDSCH.

This method can prevent the HARQ-ACK for PDSCH from being discarded, which may affect the performance of PDSCH.

In addition, because the PUCCH resource transmitting the HARQ-ACK for the multicast PDSCH may be shared by multiple UEs, this method can prevent the HARQ-ACK for the unicast PDSCH of the UE from colliding with the HARQ-ACK for the multicast PDSCH of other UEs.

When the PUCCH resource transmitting the HARQ-ACK for the multicast PDSCH and the PUCCH resource transmitting the HARQ-ACK for the unicast PDSCH overlap in time, one HARQ-ACK may be selected to be transmitted based on the priorities of the HARQ-ACK for the multicast PDSCH and the HARQ-ACK for the unicast PDSCH. That is, when the PUCCH transmitting high-priority HARQ-ACK and the PUCCH transmitting low-priority HARQ-ACK overlap, the high-priority HARQ-ACK is transmitted, and the low-priority HARQ-ACK is discarded, or the transmission of the low-priority HARQ-ACK is delayed.

For example, if the priority of the PUCCH transmitting the HARQ-ACK for the unicast PDSCH is higher than the priority of the PUCCH transmitting the HARQ-ACK for the multicast PDSCH, the HARQ-ACK for the unicast PDSCH is transmitted, and the HARQ-ACK for the multicast PDSCH is discarded. The priority of PUCCH may be configured by a higher layer signaling or determined according to preset.

According to the embodiment of the present disclosure, the UE may select one of the above two methods by receiving signaling (including higher layer signaling configuration, media access layer signaling indication, and physical layer signaling indication. The physical layer signaling refers to the information indication in the DCI).

Further, the UE may determine to use different solutions according to different situations.

For example, when the UE uses its own independent PUCCH resource to transmit HARQ-ACK for multicast PDSCH, when the PUCCH resource transmitting the HARQ-ACK for multicast PDSCH and the PUCCH resource transmitting the HARQ-ACK for unicast PDSCH overlap in time, the HARQ-ACK for the multicast PDSCH and the HARQ-ACK for the unicast PDSCH are multiplexed together.

When the UE uses the configured PUCCH resource to transmit the HARQ-ACK for the multicast PDSCH, when the PUCCH resource transmitting the HARQ-ACK for the multicast PDSCH and the PUCCH resource transmitting the HARQ-ACK for the unicast PDSCH overlap in time, one HARQ-ACK may be selected for transmission according to the priorities of the HARQ-ACK for the multicast PDSCH and the HARQ-ACK for the unicasting PDSCH.

When the UE uses the configured PUCCH resource to transmit the HARQ-ACK for the multicast PDSCH, when the PUCCH resource transmitting the HARQ-ACK for the multicast PDSCH and the PUCCH resource transmitting the HARQ-ACK for the unicast PDSCH overlap in time, the UE feeds back NACK and multiplexes the HARQ-ACK for the multicast PDSCH and the HARQ-ACK for the unicast PDSCH only when the UE receives the PDCCH but does not decode the multicast PDSCH correctly. When the UE receives the PDCCH and correctly decodes the multicast PDSCH, the UE does not feedback HARQ-ACK.

Alternatively, when the PUCCH resource transmitting the HARQ-ACK for the multicast PDSCH and the PUCCH resource transmitting the HARQ-ACK for the unicast PDSCH overlap in time, when the UE uses the shared PUCCH resource to transmit the HARQ-ACK for the multicast PDSCH (that is, the transmission mode of the HARQ-ACK information for the multicast PDSCH only when the multicast PDSCH is not decoded correctly), at this time, the HARQ-ACK for the multicast PDSCH is multiplexed with the HARQ-ACK for the unicast PDSCH, when the UE receives the PDCCH and does not decode the multicast PDSCH correctly, the HARQ-ACK information for the multicast PDSCH is NACK, and when the UE receives the PDCCH and decodes the multicast PDSCH correctly, the HARQ-ACK information for the multicast PDSCH is ACK. The method may be applied to the case where the HARQ-ACK for the multicast PDSCH is multiplexed to the unicast PUSCH, except that the PUCCH resource transmitting the HARQ-ACK for the unicast PDSCH is replaced with the unicast PUSCH.

Since the PUCCH resource transmitting the HARQ-ACK for the multicast PDSCH may be shared by multiple UEs, this method may prevent the HARQ-ACK for the unicast PDSCH of the UE from colliding with the HARQ-ACK for the multicast PDSCH of other UEs.

For the same UE, if the PUCCH transmitting the HARQ-ACK for the multicast PDSCH and the PUCCH transmitting the HARQ-ACK for the unicast PDSCH overlap in time, the HARQ-ACK for the multicast PDSCH and the HARQ-ACK for the unicast PDSCH cannot be transmitted at the same time, the priority of the PUCCH transmitting the HARQ-ACK for the multicast PDSCH is higher, as the transmission mode of the HARQ-ACK information for the multicast PDSCH only when the multicast PDSCH is not decoded correctly: if the multicast PDSCH is not decoded correctly, the HARQ-ACK information for the multicast PDSCH is transmitted as NACK, and the transmission of the HARQ-ACK for the unicast PDSCH is discarded; if the multicast PDSCH is decoded correctly, the HARQ-ACK information for the multicast PDSCH is not transmitted, and the HARQ-ACK information for the unicast PDSCH is transmitted. The advantage is to reduce the situation that the HARQ-ACK information for the unicast PDSCH is discarded.

In addition, according to the embodiment of the present disclosure, the UE may determine whether to transmit the HARQ-ACK according to the time unit where the downlink control information (DCI) is located. Assuming that the time unit where the downlink control information (DCI) is located is L, L mod Q=S, then S is the index of the UE transmitting the HARQ-ACK, where Q is a positive integer, which is configured by higher layer signaling, and mod is a modulo operation. This can save PUCCH resources and reduce the power consumption of UE transmission PUCCH.

When the HARQ-ACK for the multicast PDSCH and the HARQ-ACK for the unicast PDSCH are multiplexed together, in order to ensure the performance of the HARQ-ACK for the unicast PDSCH, a number of bits of the HARQ-ACK for the multicast PDSCH transmitted together with the HARQ-ACK for the unicast PDSCH cannot be too much, so it is necessary to bundle a plurality of bits of the HARQ-ACK for the multicast PDSCH to reduce the number of bits.

For example, in one time unit, the number of bits of the HARQ-ACK for the multicast PDSCH multiplexed with the HARQ-ACK for the unicast PDSCH is limited to a value of M, where M is a positive integer, for example, M is equal to 1, and M may be determined by a higher layer signaling configuration. If the number of bits of the HARQ-ACK for the multicast PDSCH multiplexed with the HARQ-ACK for the unicast PDSCH exceeds M, a bundling processing is required to make the number of bits of HARQ-ACK for the multicast PDSCH transmitted less than or equal to M.

An available HARQ-ACK bit bundling method is to perform an AND operation on the HARQ-ACK bits. For example, if the bit value of the first HARQ-ACK is "NACK" and the bit value of the second HARQ-ACK is "ACK," then the HARQ-ACK bit value after the "AND" operation for the bit value of the first HARQ-ACK and the bit value of the second HARQ-ACK is "NACK.". If the bit value of the first HARQ-ACK is "ACK" and the bit value of the second HARQ-ACK is "ACK," then the HARQ-ACK bit value after the "AND" operation for the bit value of the first HARQ-ACK and the bit value of the second HARQ-ACK is "ACK."

In this way, the number of bits of the HARQ-ACK for the multicast PDSCH is semi-statically configured, and the number of bits of the HARQ-ACK for the unicast PDSCH can be dynamically determined according to downlink assignment information (DAI). For example, in time slot n, the number of bits of the HARQ-ACK for the multicast PDSCH is M, and the total number of bits of the HARQ-ACK after multiplexing is M+L according to the calculation of the number L of bits of the HARQ-ACK for the unicast PDSCH. In time slot n+k, the number of bits of the HARQ-ACK for the multicast PDSCH is M, the total number of bits of the HARQ-ACK after multiplexing is M+Q according to the calculation of the number Q of bits of the HARQ-ACK for the unicast PDSCH. L and Q are positive integer.

When the HARQ-ACK for the multicast PDSCH and the HARQ-ACK for the unicast PDSCH are multiplexed together, the DAI method of joint counting may be used, that is, the multicast PDSCH is used as the unicast PDSCH to determine the number of bits of the HARQ-ACK. At this time, each UE receiving the multicast PDSCH may have its own DAI field.

The above description occurs the case where the PUCCH for transmitting the HARQ-ACK for the multicast PDSCH and the PUCCH for transmitting the HARQ-ACK for the unicast PDSCH overlap in time. However, the embodiment of the present disclosure is not limited to this, and those skilled in the art should understand that when the PUCCH for transmitting the HARQ-ACK for the multicast PDSCH and the PUSCH for transmitting the HARQ-ACK for the unicast PDSCH overlap in time, the method is similar to the method in the case of PUCCH, and the HARQ-ACK for the multicast PDSCH and the HARQ-ACK for the unicast PDSCH may also be multiplexed, but PUCCH is replace with PUSCH.

For the UE, transmitting the HARQ-ACK information for PDSCH in step S1740 may also comprise: determining a transmission power of the PUCCH resource according to a power control command in the DCI; and transmitting the HARQ-ACK information for the PDSCH on the determined PUCCH resource at the determined transmission power.

Specifically, the UE receives the DCI, where the DCI indicates the power control command, determines the PUCCH transmission power based on the power control command, and transmits the HARQ-ACK information for the multicast PDSCH on the PUCCH at the power.

For example, both the PUCCH transmitting the HARQ-ACK for the multicast PDSCH and the PUCCH transmitting the HARQ-ACK for the unicast PDSCH require power control commands to adjust their powers. When the group-common power control command transmission method is used, one method is to use a TPC command in the DCI scheduling unicast PDSCH and the TPC command in the DCI Format 2_2. The information in the DCI format 2_2 carries CRC scrambled with TPC-PUCCH-RNTI, the information block is: {TPC 1, TPC 2, ..., TPC N}.

The PUCCH transmitting the HARQ-ACK for the multicast PDSCH and the PUCCH transmitting the HARQ-ACK for the unicast PDSCH share the same TPC information block, and the DCI is scrambled based on the first RNTI. For example, TPC 1 is used for the power control of the PUCCH transmitting the HARQ-ACK for the unicast PDSCH and is used for the power control of the PUCCH transmitting the HARQ-ACK for the multicast PDSCH.

This method is advantageous in that both the PUCCH transmitting the HARQ-ACK for the unicast PDSCH and the PUCCH transmitting the HARQ-ACK for the multicast PDSCH can get power adjustments in time.

Another way is to use DCI Format 2_2, the information in DCI format 2_2 carries CRC scrambled with MBS-PUCCH-RNTI, the information block is: {TPC 1, TPC 2, ..., TPC N}, PUCCH transmitting the HARQ-ACK for the multicast PDSCH uses one TPC information block, and the DCI is scrambled based on the second RNTI. The TPC is only used for power control of the PUCCH transmitting the HARQ-ACK for the multicast PDSCH.

This method is advantageous in that the power control of the PUCCH transmitting the HARQ-ACK for the multicast PDSCH is adjusted more accurately.

The third way is to adopt a new DCI Format, which is marked as DCI format x. The information in DCI format x carries CRC scrambled with MBS-PUCCH-RNTI and the information block is: {TPC 1, TPC 2, ..., TPC N}, each PUCCH transmitting the HARQ-ACK for the multicast PDSCH uses one TPC information block for power control of respective UE, and the DCI is scrambled based on the second RNTI. The TPC is only used for power control of the PUCCH transmitting the HARQ-ACK for the multicast PDSCH. A payload size of the DCI may be the same as a payload size of the DCI for scheduling the MBS PDSCH. In other words, the number of information bits of the DCI may be less than or equal to the payload size of the DCI for scheduling MBS PDSCH, and if the number of information bits of the DCI is less than the payload size of the DCI for scheduling MBS PDSCH, the payload size of the DCI is the same as that of the DCI for scheduling MBS PDSCH by supplementing the information bits of the DCI with "0." Therefore, the number of blind detections of the PDCCH can be reduced.

This method can ensure that UEs without unicast service transmission can also perform effective closed-loop power control, without additional PDCCH detection complexity, and can reduce the number of blind PDCCH detections.

Fig.18 illustrates an exemplary flowchart of a method 1800 for transmitting aperiodic channel state information (CSI) report according to an embodiment of the present disclosure. The method 1800 may be implemented at the UE side.

As shown in Fig.18, at step S1810 of the method 1800, the downlink control information (DCI) is received, a CSI driving field is included in the DCI.

At step S1820, an aperiodic CSI report for the multicast physical downlink shared channel (PDSCH) is transmitted based on the CSI driving field.

The received DCI includes a field for driving the aperiodic CSI report, which may be used to drive the aperiodic CSI report. This field may be called a CSI driving field, such as a CSI Request.

In an example, transmitting the aperiodic CSI report for the multicast PDSCH based on the CSI driving field comprises: determining a type of the aperiodic CSI report according to the value of the CSI driving field; and transmitting the determined aperiodic CSI report.

In an example, transmitting the aperiodic CSI report for the multicast PDSCH based on the CSI driving field further comprises: determining whether to transmit the aperiodic CSI report according to a higher layer signaling configuration.

In an example, transmitting the aperiodic CSI report for the multicast PDSCH based on the CSI driving field further comprises: determining whether to transmit the aperiodic CSI report according to a measured CSI, based on the value of the CSI drive field.

In an example, the PUCCH resource for transmitting the CQI indication is determined according to the CQI index measured by the UE, and the PUCCH resources respectively correspond to ranges of different CQI indexes.

In an example, the CSI driving field is located in at least one of the physical downlink control channel (PDCCH) for scheduling the multicast PDSCH and the multicast PDSCH scheduled by PDCCH.

For example, the CSI drive field may comprise 2 bits, and may indicate a totally 4 sets of aperiodic CSI reports, as shown in Table 3.

**[Table 3]**

| Correspondence between the CSI drive field value and the type of aperiodic CSI report | |
|---|---|
| CSI drive field value | type of aperiodic CSI report |
| 00 | No feedback of aperiodic CSI report |
| 01 | aperiodic CSI report 1 configured by higher layer signaling |
| 10 | aperiodic CSI report 2 configured by higher layer signaling |
| 11 | aperiodic CSI report 3 configured by higher layer signaling |

After the UE receives the CSI drive field, following method may be used to determine whether to transmit the aperiodic CSI report.

All UEs that have received the CSI driving field used to drive the aperiodic CSI report in the DCI transmit the aperiodic CSI report.

For example, in the case of Table 3, the UE may determine the type of aperiodic CSI report corresponding to the value of the CSI drive field according to which of 00, 01, 10, or 11 the value is, that is, to feedback no CSI report, feedback aperiodic CSI report 1, feedback aperiodic CSI report 2 or feedback aperiodic CSI report 3, and then transmit the determined type of the aperiodic CSI report.

If it is determined through the higher layer signaling configuration that the UE receives the higher layer signaling configuration to feedback the aperiodic CSI report for the multicast PDSCH, and receives the CSI driving field in the DCI, then the UE transmits the aperiodic CSI report based on the CSI driving field. On the contrary, the UE has not received the higher layer signaling configuration to feedback the aperiodic CSI report for the multicast PDSCH, even if the UE receives the CSI driving field in the DCI, the UE does not transmit the aperiodic CSI report.

If it is determined through the higher layer signaling configuration that the UE receives the higher layer signaling configuration to feedback the aperiodic CSI report for the multicast PDSCH, and the value of the CSI driving field in the received DCI is a certain value, then the UE transmits the aperiodic CSI report based on the certain value of the CSI driving field. On the contrary, the UE, which has not received the higher layer signaling configuration to feedback the aperiodic CSI report for the multicast PDSCH, would not transmit the aperiodic CSI report, even if the UE receives the CSI driving field in the DCI. Alternatively, the UE receives the higher layer signaling configuration to feedback aperiodic CSI report for the multicast PDSCH, but the value of the CSI driving field in the DCI is not a certain value, then the UE does not transmit the aperiodic CSI report.

For example, assuming that a UE-1 receives a higher layer signaling configuration to feedback aperiodic CSI report for multicast PDSCH, and only when the CSI drive field value is 01, the UE-1 transmits the aperiodic CSI report, that is, transmits the aperiodic CSI report 1. Otherwise, the UE-1 does not transmit aperiodic CSI report.

The CSI driving field is included in the DCI, and may be located in at least one of the physical downlink control channel (PDCCH) for scheduling the multicast PDSCH and the multicast PDSCH scheduled by PDCCH.

In an example, the CSI driving field may be divided into two parts, the first part of the CSI driving field is located in the DCI of the PDCCH for scheduling multicast PDSCH, and the second part of the CSI driving field is located in the multicast PDSCH scheduled by PDCCH. The first part of the CSI drive field may be as shown in Table 3. The second part of the CSI driving field determines which UEs need to feedback aperiodic CSI reports. For example, a bitmap method may be used to indicate. For example, the second part of the CSI driving field includes L bits, L is a natural number, and each bit of information determines whether one or a group of UEs transmit aperiodic CSI reports. Each UE may determine the corresponding bit information of the UE through higher layer signaling configuration. For example, a bit information value of "0" indicates that the UE does not feedback aperiodic CSI report, and a bit information value of "1" indicates that the UE feeds back aperiodic CSI report. That is, when the UE determines the type of aperiodic CSI report according to the first part of CSI driving field, and determines whether the UE feeds back the aperiodic CSI report according to the second part of CSI driving field.

The CSI driving field is included in the DCI and is located in the multicast PDSCH scheduled by PDCCH. For example, as shown in Table 3, each CSI driving field includes 2 bits, and it is determined that at least one UE, that is, one UE or UE group or multiple UEs or multiple UE groups transmit aperiodic CSI reports.

The UE may also determine whether to transmit the aperiodic CSI report according to the CSI measured by the UE. For example, the UE may determine whether to transmit the aperiodic CSI report according to whether the CSI is within a range. For example, when the CQI index is greater than or equal to the predetermined value S, or when the CQI index is less than S, S is a natural number, and the UE transmits the aperiodic CSI report. The UE may obtain S by receiving higher layer signaling configuration, and the UE may also obtain S by receiving physical layer signaling (information in the DCI). For example, the value of S may be indicated by driving the information bit in the DCI of the aperiodic CSI report.

Alternatively, the S value may be determined by the CSI drive field value, as shown in Table 4. For example, when the received value of the CSI drive field is 01, it may be determined that the value of S is S1. Therefore, when the CQI index is greater than or equal to S1 (or less than S1), the UE transmits the aperiodic CSI report 1.

**[Table 4]**

| Correspondence between CSI drive field value and S value | | |
|---|---|---|
| CSI drive field value | type of aperiodic CSI report | S value |
| 00 | No feedback of aperiodic CSI report | reserved |
| 01 | aperiodic CSI report 1 configured by higher layer signaling | S1 |
| 10 | aperiodic CSI report 2 configured by higher layer signaling | S2 |
| 11 | aperiodic CSI report 3 configured by higher layer signaling | S3 |

This method may also be used to determine whether the UE transmits semi-persistent (SP) CSI report, and the semi-persistent CSI report may be used to replace the aperiodic CSI report. For the multicast PDSCH, the base station wants to know the situation of the UE receiving the worst CSI for the multicast PDSCH, so this method can let the base station know the worst CSI of the UE, and other UEs do not need to transmit CSI, thereby reducing CSI transmission.

This method may also be used to determine whether the UE transmits periodic CSI reports, and periodic CSI report may be used to replace the aperiodic CSI report. For the multicast PDSCH, the base station wants to know the situation of the UE receiving the worst CSI for multicast PDSCH, so this method can let the base station know the worst CSI of the UE, and other UEs do not need to transmit CSI, thereby reducing CSI transmission .

In addition, the PUCCH resource for transmitting the CQI indication may also be determined according to the CQI index measured by the UE, and the PUCCH resources respectively correspond to the ranges of different CQI indexes. The CQI indication may be included in the CSI report (periodic CSI report, aperiodic CSI report, or semi-persistent CSI report).

For example, at least one value of S (including higher layer signaling configuration, media access layer signaling indication, and physical layer signaling indication, the physical layer signaling refers to the information indication in DCI) may be predetermined, for example, S_1, S_2, 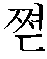 , S_L, and S_1<S_2< 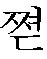 ,<S_L, L is an integer greater than 1, assume the CQI index measured by the UE is CQI_a, if CQI_a<S_1, the UE transmits CQI indication on PUCCH_1, if S_1<=CQI_a<S_2 , The UE transmits CQI indication on PUCCH_2, and so on, if S_L-1<=CQI_a<S_L, the UE transmits CQI indication on PUCCH_L.

Therefore, when feeding back the CSI for the multicast PDSCH, different UEs receiving the multicast PDSCH may share the same PUCCH resource to feedback the CSI. For example, the CQI index measured by a UE-1 is CQI_a, S_1<=CQI_a <S_2, the UE-1 transmits CQI indication on PUCCH_2, the CQI index measured by the UE-2 is CQI_b, S_1<=CQI_b <S_2, and the UE-2 also transmits CQI indication on PUCCH_2. In this way, when the base station receives CQI indication on a certain PUCCH, for example, PUCCH_x, the base station may know the range of the CQI corresponding to the PUCCH_x, and thus may select a reasonable MCS to schedule the multicast PDSCH according to the range of the CQI. For example, when the base station receives the CQI indication on PUCCH_2, the base station knows that there is a UE whose CQI index is CQI_x, S_1<=CQI_x<S_2, so the base station selects a reasonable MCS to schedule the multicast PDSCH according to this information.

Therefore, when there are more UEs receiving multicast PDSCH, this method may save PUCCH resource for CSI feedback because the shared resource is used to feedback CSI.

Those skilled in the art can understand that the CSI drive field having 2 bits is only an example, and the CSI drive field may include fewer or more bits to indicate fewer or more sets of aperiodic CSI reports.

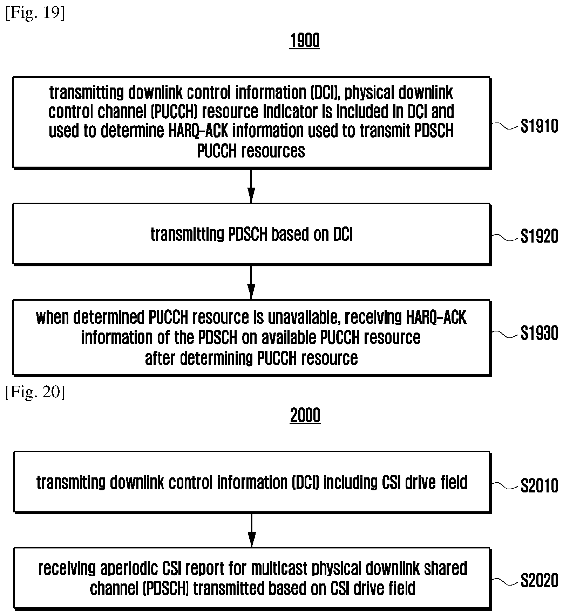

Fig.19 illustrates an exemplary flow chart of a method 1900 for receiving hybrid automatic retransmission request acknowledgement (HARQ-ACK) information according to an embodiment of the present disclosure. The method 1900 may be implemented at the base station side.

As shown in Fig.19, at step S1910 of the method 1900, the downlink control information (DCI) is transmitted, the physical downlink control channel (PUCCH) resource indicator is included in the DCI, and the PUCCH resource indicator is used to determine the HARQ-ACK information used to transmit the PDSCH PUCCH resources.

At step S1920, the PDSCH is transmitted based on the DCI.

At step S1930, when the determined PUCCH resource is unavailable, the HARQ-ACK information of the PDSCH is received on the available PUCCH resource after the determined PUCCH resource.

In an example, the available PUCCH resource after the determined PUCCH resource is the first available resource among the available PUCCH resources after the determined PUCCH resource.

In an example, the time interval between the first available resource among the available PUCCH resources after the determined PUCCH resource and the determined PUCCH resource does not exceed a preset value.

The method 1900 may further comprise transmitting signaling to indicate to the user equipment (UE) one of the followings: when the PDSCH is not decoded correctly, NACK is fed back on the determined PUCCH resource; when the PDSCH is decoded correctly, ACK is fed back on the determined PUCCH resource, and when the PDSCH is not decoded correctly, NACK is fed back on the determined PUCCH resource; and neither ACK nor NACK is fed back.

The DCI may include a power control command used to determine a transmission power of PUCCH resource, wherein the DCI is scrambled based on the radio network temporary identifier (RNTI).

In an example, a power control command is transmitted in the DCI scrambled based on the first RNTI, and the power control command is suitable for transmitting the PUCCH of the unicast HARQ-ACK and the PUCCH of the multicast HARQ-ACK.

In an example, the power control command is transmitted in the DCI scrambled based on the second RNTI, and the power control command is suitable for transmitting the PUCCH of the multicast HARQ-ACK.

In an example, the payload size of the DCI scrambled based on the second RNTI is equal to the payload size of the DCI for scheduling the MBS PDSCH.

In an example, the number of information bits of the DCI scrambled based on the second RNTI is less than or equal to the payload size of the DCI for scheduling the MBS PDSCH. When there are multiple UEs, a UE-1 and a UE-2 may belong to a subgroup and share one PUCCH resource, and a UE-3 and a UE-4 may belong to a subgroup and share one PUCCH resource.

The subgroup that transmits the HARQ-ACK for the multicast PDSCH may be determined by receiving signaling (including higher layer signaling configuration, media access layer signaling indication, and physical layer signaling indication. Physical layer signaling refers to the information indication in DCI). For example, a UE-1 receives the higher layer signaling configuration and determines that the UE-1 belongs to the first subgroup, and a UE-2 receives the higher layer signaling configuration and determines that the UE-2 belongs to the first subgroup, therefore the UE-1 and the UE-2 share one PUCCH resource to transmit the HARQ-ACK for the multicast PDSCH. A UE-3 receives the higher layer signaling configuration and determines that the UE-3 belongs to the second subgroup. A UE-4 receives the higher layer signaling configuration and determines that the UE-4 belongs to the second subgroup. Therefore, the UE-3 and the UE-4 share one PUCCH resource to transmit the HARQ-ACK for the multicast PDSCH.

Alternatively, the subgroup to which UE belongs may be indicated by the implicit signaling. For example, UEs that transmit HARQ-ACK in the same uplink serving cell belong to one subgroup. For example, as shown in Fig.19, a UE-1 and a UE-2 transmit HARQ-ACK in uplink serving cell 1, and the UE-1 and the UE-2 belong to one subgroup, a UE-3 and a UE-4 transmit HARQ-ACK in the uplink serving cell 2, and the UE-3 and the UE-4 belong to one subgroup.

The advantage of this is that a balance can be made between saving configuration signaling overhead and avoiding that the UE cannot correctly receive the multicast PDSCH due to the UE's missed detection of the PDCCH.

In another example, different UEs receiving the multicast PDSCH use their independent PUCCH resources to transmit HARQ-ACK.

The advantage of using this method is that if some UEs miss detection of the PDCCH, the base station may also know through blind detection that some UEs did not receive the multicast PDSCH correctly, and the base station may retransmit the multicast PDSCH.

For the HARQ-ACK transmission mode for the multicast PDSCH, an indication mode of the PUCCH resource may be: the PUCCH resource set indicated by one PUCCH resource indicator (PRI) including not only the PUCCH resources shared by a group of UEs, but also including the PUCCH resources used by a single UE. Assuming that there are 5 UEs receiving the multicast PDSCH, namely: a UE-1, a UE-2, a UE-3, a UE-4, and a UE-5. The PRI nay contain 2 bits, as shown in Table 5, the UE-3 and the UE-4 share one PUCCH resource, and the UE-5 independently uses one PUCCH resource.

For example, assuming that according to the signaling indication, a UE-1 and a UE-2 do not transmit HARQ-ACK, a UE-3 and a UE-4 only transmit NACK, and a UE-5 transmits both NACK and ACK.

Using such a different HARQ-ACK transmission mode for different UEs, on the basis of ensuring the performance of PDSCH and PDCCH, PUCCH resources are saved, and the power consumption of PUCCH transmission is also saved.

**[Table 5]**

| Correspondence table of PRI value and PUCCH resource | | |
|---|---|---|
| PRI value | PUCCH resources of UE-3 and UE-4 (shared PUCCH resources) | PUCCH resources of UE-5 (UE individual PUCCH resources) |
| 00 | PUCCH resource 1 configured by higher layer signaling | PUCCH resource 1 configured by higher layer signaling |
| 01 | PUCCH resource 2 configured by higher layer signaling | PUCCH resource 2 configured by higher layer signaling |
| 10 | PUCCH resource 3 configured by higher layer signaling | PUCCH resource 3 configured by higher layer signaling |
| 11 | PUCCH resource 4 configured by higher layer signaling | PUCCH resource 4 configured by higher layer signaling |

In addition, for the HARQ-ACK transmission mode of the multicast PDSCH, the PUCCH resource indication mode may be: PUCCH resources indicated by one PUCCH resource indicator (PRI) may include PUCCH resources located in different uplink serving cells. Corresponding to the same PRI value, the PUCCH resources of different UEs may be located in different uplink serving cells, and the PUCCH resource set of each UE is independently configured. As shown in Table 6, the PUCCH resource of a UE-1 is located in the uplink serving cell 1, the PUCCH resource of a UE-2 is located in uplink serving cell 2.

**[Table 6]**

| Correspondence table of PRI value and PUCCH resource of different UEs | | |
|---|---|---|
| PRI value | PUCCH resource of UE-1 (in uplink serving cell 1) | PUCCH resource of UE-2 (in uplink serving cell 2) |
| 00 | PUCCH resource 1 configured for higher layer signaling configuration of UE-1 | PUCCH resource 1 configured for higher layer signaling configuration of UE-2 |
| 01 | PUCCH resource 2 configured for higher layer signaling configuration of UE-1 | PUCCH resource 2 configured for higher layer signaling configuration of UE-2 |
| 10 | PUCCH resource 3 configured for higher layer signaling configuration of UE-1 | PUCCH resource 3 configured for higher layer signaling configuration of UE-2 |
| 11 | PUCCH resource 4 configured for higher layer signaling configuration of UE-1 | PUCCH resource 4 configured for higher layer signaling configuration of UE-2 |

Fig.20 illustrates an exemplary flowchart of a method 2000 for receiving hybrid automatic retransmission request acknowledgement (HARQ-ACK) information according to an embodiment of the present disclosure. The method 2000 may be implemented at the base station side.

As shown in Fig.20, at step S2010 of method 2000, downlink control information (DCI) is transmitted, the DCI includes a CSI drive field.

At step S2020, the aperiodic CSI report for the multicast physical downlink shared channel (PDSCH) transmitted based on the CSI drive field is received.

In an example, the CSI driving field is located in at least one of the physical downlink control channel (PDCCH) for scheduling the multicast PDSCH and the multicast PDSCH scheduled by PDCCH.

In an example, the CQI indication is received on the PUCCH resource determined according to the CQI index measured by the UE, and the PUCCH resources respectively correspond to the ranges of different CQI indexes.

In an example, the CSI driving field is used for at least one UE, such as one UE or one UE group, or multiple UEs or multiple UE groups.

In an example, the CSI driving field in the multicast PDSCH scheduled by the PDCCH indicates whether at least one UE transmits an aperiodic CSI report.

Fig.23 illustrates an electronic device according to embodiments of the present disclosure. Referring to the Fig.23, the electronic device 2300 may include a processor (or a controller) 2310, a transceiver 2320 and a memory 2330. However, all of the illustrated components are not essential. The electronic device 2300 may be implemented by more or less components than those illustrated in Fig.23. In addition, the processor 2310 and the transceiver 2320 and the memory 2330 may be implemented as a single chip according to another embodiment.

The electronic device 2300 may correspond to electronic device described above. For example, the electronic device 2300 may correspond to the terminal or the UE 116 illustrated in Fig.3a. For example, the electronic device 2300 may be implemented to perform the methods described above with reference to Fig.5, Fig.9, Fig.11, Fig.17, and Fig.18.

The aforementioned components will now be described in detail.

The processor 2310 may include one or more processors or other processing devices that control the provided function, process, and/or method. Operation of the electronic device 2300 may be implemented by the processor 2310.

The transceiver 2320 may include a RF transmitter for up-converting and amplifying a transmitted signal, and a RF receiver for down-converting a frequency of a received signal. However, according to another embodiment, the transceiver 2320 may be implemented by more or less components than those illustrated in components.

The transceiver 2320 may be connected to the processor 2310 and transmit and/or receive a signal. The signal may include control information and data. In addition, the transceiver 2320 may receive the signal through a wireless channel and output the signal to the processor 2310. The transceiver 2320 may transmit a signal output from the processor 2310 through the wireless channel.

The memory 2330 may store the control information or the data included in a signal obtained by the electronic device 2300. The memory 2330 may be connected to the processor 2310 and store at least one instruction or a protocol or a parameter for the provided function, process, and/or method. The memory 2330 may include read-only memory (ROM) and/or random access memory (RAM) and/or hard disk and/or CD-ROM and/or DVD and/or other storage devices.

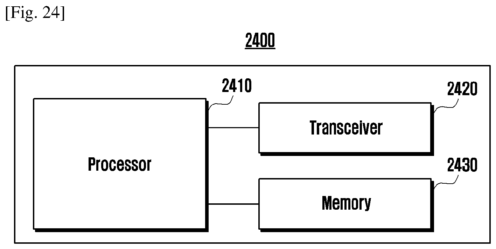

Fig.24 illustrates a base station according to embodiments of the present disclosure.

Referring to the Fig.24, the base station 2400 may include a processor (or a controller) 2410, a transceiver 2420 and a memory 2430. However, all of the illustrated components are not essential. The base station 2400 may be implemented by more or less components than those illustrated in Fig.24. In addition, the processor 2410 and the transceiver 2420 and the memory 2430 may be implemented as a single chip according to another embodiment.

The base station 2400 may correspond to the gNB described above. For example, the base station 2400 may correspond to the gNB 102 illustrated in Fig.3b.

The aforementioned components will now be described in detail.

The processor 2410 may include one or more processors or other processing devices that control the provided function, process, and/or method. Operation of the base station 2400 may be implemented by the processor 2410. When the instructions are executed by the processor 2410, the processor 2410 is caused to execute the methods described above with reference to Fig.5, Fig.9 and Fig.11, Fig.17 and Fig.18.

The transceiver 2420 may include a RF transmitter for up-converting and amplifying a transmitted signal, and a RF receiver for down-converting a frequency of a received signal. However, according to another embodiment, the transceiver 2420 may be implemented by more or less components than those illustrated in components.

The transceiver 2420 may be connected to the processor 2410 and transmit and/or receive a signal. The signal may include control information and data. In addition, the transceiver 2420 may receive the signal through a wireless channel and output the signal to the processor 2410. The transceiver 2420 may transmit a signal output from the processor 2410 through the wireless channel.

The memory 2430 may store the control information or the data included in a signal obtained by the base station 2400. The memory 2430 may be connected to the processor 2410 and store at least one instruction or a protocol or a parameter for the provided function, process, and/or method. The memory 2430 may include read-only memory (ROM) and/or random access memory (RAM) and/or hard disk and/or CD-ROM and/or DVD and/or other storage devices.

Although the present disclosure has been described with various embodiments, various changes and modifications may be suggested to one skilled in the art. It is intended that the present disclosure encompass such changes and modifications as fall within the scope of the appended claims.

## Claims

1. A method performed by a terminal in a wireless communication system, the method comprising:
receiving, from a base station, downlink control information, DCI;
receiving, from the base station, a physical downlink shared channel, PDSCH, based on the DCI; and
transmitting, to the base station, a physical uplink control channel, PUCCH, including hybrid automatic repeat request, HARQ, feedback information for the PDSCH on at least one of multiple serving cells according to an HARQ feedback timing,
wherein the multiple serving cells comprise a primary cell, PCell, and a secondary cell, SCell, configured for a PUCCH transmission and the HARQ feedback timing is based on slots of the PCell.

2. The method of claim 1, wherein a slot length for the PUCCH is based on a reference subcarrier spacing, SCS, configuration for the PCell.

3. The method of claim 1, further comprising in case that a slot of the PCell overlaps in time with more than one slot of the SCell configured for the PUCCH transmission and the PUCCH is to be transmitted on the SCell configured for the PUCCH transmission, determining a first slot of overlapping slots of the SCell configured for the PUCCH transmission as a slot for the PUCCH.

4. The method of claim 1, wherein the DCI includes an indicator indicating the HARQ feedback timing.

5. A method performed by a base station in a wireless communication system, the method comprising:
transmitting, to a terminal, downlink control information, DCI;
transmitting, to the terminal, a physical downlink shared channel, PDSCH, according to the DCI; and
receiving, from the terminal, a physical uplink control channel, PUCCH, including hybrid automatic repeat request, HARQ, feedback information for the PDSCH on at least one of multiple serving cells according to an HARQ feedback timing,
wherein the multiple serving cells comprise a primary cell, PCell, and a secondary cell, SCell, configured for a PUCCH transmission and the HARQ feedback timing is associated with slots of the PCell.

6. The method of claim 5, wherein in case that a slot of the PCell overlaps in time with more than one slot of the SCell configured for the PUCCH transmission and the PUCCH is to be received on the SCell configured for the PUCCH transmission, a slot for the PUCCH is a first slot of overlapping slots of the SCell configured for the PUCCH transmission.

7. The method of claim 5, wherein a slot length for the PUCCH is based on a reference subcarrier spacing, SCS, configuration for the PCell, and
wherein the DCI includes an indicator indicating the HARQ feedback timing.

8. A terminal in a wireless communication system, the terminal comprising:
a transceiver; and
a controller configured to:
receive, from a base station via the transceiver, downlink control information, DCI,
receive, from the base station via the transceiver, a physical downlink shared channel, PDSCH, based on the DCI, and
transmit, to the base station via the transceiver, a physical uplink control channel, PUCCH, including hybrid automatic repeat request, HARQ, feedback information for the PDSCH on at least one of multiple serving cells according to an HARQ feedback timing,
wherein the multiple serving cells comprise a primary cell, PCell, and a secondary cell, SCell, configured for a PUCCH transmission and the HARQ feedback timing is based on slots of the PCell.

9. The terminal of claim 8, wherein a slot length for the PUCCH is based on a reference subcarrier spacing, SCS, configuration for the PCell.

10. The terminal of claim 8, wherein the controller is further configured to in case that a slot of the PCell overlaps in time with more than one slot of the SCell configured for the PUCCH transmission and the PUCCH is to be transmitted on the SCell configured for the PUCCH transmission, determine a first slot of overlapping slots of the SCell configured for the PUCCH transmission as a slot for the PUCCH.

11. The terminal of claim 8, wherein the DCI includes an indicator indicating the HARQ feedback timing.

12. A base station in a wireless communication system, the base station comprising:
a transceiver; and
a controller configured to:
transmit, to a terminal via the transceiver, downlink control information, DCI,
transmit, to the terminal via the transceiver, a physical downlink shared channel, PDSCH, according to the DCI, and
receive, from the terminal via the transceiver, a physical uplink control channel, PUCCH, including hybrid automatic repeat request, HARQ, feedback information for the PDSCH on at least one of multiple serving cells according to an HARQ feedback timing,
wherein the multiple serving cells comprise a primary cell, PCell, and a secondary cell, SCell, configured for a PUCCH transmission and the HARQ feedback timing is associated with slots of the PCell.

13. The base station of claim 12, wherein a slot length for the PUCCH is based on a reference subcarrier spacing, SCS, configuration for the PCell.

14. The base station of claim 12, wherein in case that a slot of the PCell overlaps in time with more than one slot of the SCell configured for the PUCCH transmission and the PUCCH is to be received on the SCell configured for the PUCCH transmission, a slot for the PUCCH is a first slot of overlapping slots of the SCell configured for the PUCCH transmission.

15. The base station of claim 12, wherein the DCI includes an indicator indicating the HARQ feedback timing.

## Patentansprüche

1. Verfahren, das von einem Endgerät in einem drahtlosen Kommunikationssystem durchgeführt wird, wobei das Verfahren Folgendes umfasst:
Empfangen, von einer Basisstation, von Downlink-Steuerinformationen, DCI;
Empfangen, von der Basisstation, eines gemeinsam genutzten physikalischen Downlink-Kanals, PDSCH, basierend auf den DCI; und
Übertragen, an die Basisstation, eines physikalischen Uplink-Steuerkanals, PUCCH, der Rückmeldungsinformationen einer hybriden automatischen Wiederholungsanforderung, HARQ, für den PDSCH an mindestens einer von mehreren bedienenden Zellen gemäß einem HARQ-Rückmeldungszeitpunkt beinhaltet,
wobei die mehreren bedienenden Zellen eine Primärzelle, PCell, und eine Sekundärzelle, SCell, umfassen, die für eine PUCCH-Übertragung konfiguriert ist, und der HARQ-Rückmeldungszeitpunkt auf Schlitzen der PCell basiert.

2. Verfahren nach Anspruch 1, wobei eine Schlitzlänge für den PUCCH auf einer Referenz-Unterträgerabstands-, SCS, -Konfiguration für die PCell basiert.

3. Verfahren nach Anspruch 1, ferner umfassend, falls sich ein Schlitz der PCell zeitlich mit mehr als einem Schlitz der SCell überschneidet, die für die PUCCH-Übertragung konfiguriert ist, und der PUCCH an der SCell übertragen werden soll, die für die PUCCH-Übertragung konfiguriert ist, Bestimmen eines ersten Schlitzes der sich überschneidenden Schlitze der SCell, die für die PUCCH-Übertragung konfiguriert ist, als Schlitz für den PUCCH.

4. Verfahren nach Anspruch 1, wobei die DCI einen Indikator beinhalten, der den HARQ-Rückmeldungszeitpunkt angibt.

5. Verfahren, das von einer Basisstation in einem drahtlosen Kommunikationssystem durchgeführt wird, wobei das Verfahren Folgendes umfasst:
Übertragen, an ein Endgerät, von Downlink-Steuerinformationen, DCI;
Übertragen, an das Endgerät, eines gemeinsam genutzten physikalischen Downlink-Kanals, PDSCH, gemäß den DCI; und
Empfangen, von dem Endgerät, eines physikalischen Uplink-Steuerkanals, PUCCH, der Rückmeldungsinformationen einer hybriden automatischen Wiederholungsanforderung, HARQ, für den PDSCH an mindestens einer von mehreren bedienenden Zellen gemäß einem HARQ-Rückmeldungszeitpunkt beinhaltet,
wobei die mehreren bedienenden Zellen eine Primärzelle, PCell, und eine Sekundärzelle, SCell, umfassen, die für eine PUCCH-Übertragung konfiguriert ist, und der HARQ-Rückmeldungszeitpunkt mit Schlitzen der PCell assoziiert ist.

6. Verfahren nach Anspruch 5, wobei, falls sich ein Schlitz der PCell zeitlich mit mehr als einem Schlitz der SCell überschneidet, die für die PUCCH-Übertragung konfiguriert ist, und der PUCCH an der SCell empfangen werden soll, die für die PUCCH-Übertragung konfiguriert ist, ein Schlitz für den PUCCH ein erster Schlitz der sich überschneidenden Schlitze der SCell ist, die für die PUCCH-Übertragung konfiguriert ist.

7. Verfahren nach Anspruch 5, wobei eine Schlitzlänge für den PUCCH auf einer Referenz-Unterträgerabstands-, SCS, -Konfiguration für die PCell basiert, und
wobei die DCI einen Indikator beinhalten, der den HARQ-Rückmeldungszeitpunkt angibt.

8. Endgerät in einem drahtlosen Kommunikationssystem, wobei das Endgerät Folgendes umfasst:
einen Transceiver; und
eine Steuerung, die konfiguriert ist zum:
Empfangen, von einer Basisstation über den Transceiver, von Downlink-Steuerinformationen, DCI,
Empfangen, von der Basisstation über den Transceiver, eines gemeinsam genutzten physikalischen Downlink-Kanals, PDSCH, basierend auf den DCI, und
Übertragen, an die Basisstation über den Transceiver, eines physikalischen Uplink-Steuerkanals, PUCCH, der Rückmeldungsinformationen einer hybriden automatischen Wiederholungsanforderung, HARQ, für den PDSCH an mindestens einer von mehreren bedienenden Zellen gemäß einem HARQ-Rückmeldungszeitpunkt beinhaltet,
wobei die mehreren bedienenden Zellen eine Primärzelle, PCell, und eine Sekundärzelle, SCell, umfassen, die für eine PUCCH-Übertragung konfiguriert ist, und der HARQ-Rückmeldungszeitpunkt auf Schlitzen der PCell basiert.

9. Endgerät nach Anspruch 8, wobei eine Schlitzlänge für den PUCCH auf einer Referenz-Unterträgerabstands-, SCS, -Konfiguration für die PCell basiert.

10. Endgerät nach Anspruch 8, wobei die Steuerung ferner konfiguriert ist zum, falls sich ein Schlitz der PCell zeitlich mit mehr als einem Schlitz der SCell überschneidet, die für die PUCCH-Übertragung konfiguriert ist, und der PUCCH an der SCell übertragen werden soll, die für die PUCCH-Übertragung konfiguriert ist, Bestimmen eines ersten Schlitzes der sich überschneidenden Schlitze der SCell, die für die PUCCH-Übertragung konfiguriert ist, als Schlitz für den PUCCH.

11. Endgerät nach Anspruch 8, wobei die DCI einen Indikator beinhalten, der den HARQ-Rückmeldungszeitpunkt angibt.

12. Basisstation in einem drahtlosen Kommunikationssystem, wobei die Basisstation Folgendes umfasst:
einen Transceiver; und
eine Steuerung, die konfiguriert ist zum:
Übertragen, an ein Endgerät über den Transceiver, von Downlink-Steuerinformationen, DCI,
Übertragen, an das Endgerät über den Transceiver, eines gemeinsam genutzten physikalischen Downlink-Kanals, PDSCH, gemäß den DCI, und
Empfangen, von dem Endgerät über den Transceiver, eines physikalischen Uplink-Steuerkanals, PUCCH, der Rückmeldungsinformationen einer hybriden automatischen Wiederholungsanforderung, HARQ, für den PDSCH an mindestens einer von mehreren bedienenden Zellen gemäß einem HARQ-Rückmeldungszeitpunkt beinhaltet,
wobei die mehreren bedienenden Zellen eine Primärzelle, PCell, und eine Sekundärzelle, SCell, umfassen, die für eine PUCCH-Übertragung konfiguriert ist, und der HARQ-Rückmeldungszeitpunkt mit Schlitzen der PCell assoziiert ist.

13. Basisstation nach Anspruch 12, wobei eine Schlitzlänge für den PUCCH auf einer Referenz-Unterträgerabstands-, SCS, -Konfiguration für die PCell basiert.

14. Basisstation nach Anspruch 12, wobei, falls sich ein Schlitz der PCell zeitlich mit mehr als einem Schlitz der SCell überschneidet, die für die PUCCH-Übertragung konfiguriert ist, und der PUCCH an der SCell empfangen werden soll, die für die PUCCH-Übertragung konfiguriert ist, ein Schlitz für den PUCCH ein erster Schlitz der sich überschneidenden Schlitze der SCell ist, die für die PUCCH-Übertragung konfiguriert ist.

15. Basisstation nach Anspruch 12, wobei die DCI einen Indikator beinhalten, der den HARQ-Rückmeldungszeitpunkt angibt.

## Revendications

1. Procédé exécuté par un terminal dans un système de communication sans fil, le procédé comprenant :
recevoir, depuis une station de base, des informations de commande de liaison descendante, DCI ;
recevoir, depuis la station de base, un canal physique partagé de liaison descendante, PDSCH, en se basant sur les DCI ; et
transmettre, à la station de base, un canal de commande montante physique, PUCCH, comprenant des informations de rétroaction de demande automatique hybride, HARQ, pour le PDSCH sur au moins une de multiples cellules de desserte selon une synchronisation de rétroaction HARQ,
dans lequel les multiples cellules de desserte comprennent une cellule primaire, PCell, et une cellule secondaire, SCell, configurées pour une transmission de PUCCH, et la synchronisation de rétroaction HARQ est basée sur des créneaux de la PCell.

2. Procédé de la revendication 1, dans lequel une longueur de créneau pour le PUCCH est basée sur une configuration d'espacement de sous-porteuses de référence, SCS, pour la PCell.

3. Procédé de la revendication 1, comprenant en outre, dans le cas où un créneau de la PCell chevauche dans le temps plus d'un créneau de la SCell configurée pour la transmission de PUCCH et que le PUCCH doit être transmis sur la SCell configurée pour la transmission PUCCH, la détermination d'un premier créneau de créneaux chevauchants de la SCell configurée pour la transmission de PUCCH en tant que créneau pour le PUCCH.

4. Procédé de la revendication 1, dans lequel les DCI comprennent un indicateur indiquant la synchronisation de rétroaction HARQ.

5. Procédé exécuté par une station de base dans un système de communication sans fil, le procédé comprenant :
transmettre, à un terminal, des informations de commande de liaison descendante, DCI ; et
transmettre, au terminal, un canal physique partagé de liaison descendante, PDSCH, en fonction des DCI ; et
recevoir, en provenance du terminal, un canal de commande montante physique, PUCCH, comprenant des informations de rétroaction de demande automatique hybride, HARQ, pour le PDSCH sur au moins une de multiples cellules de desserte conformément à une synchronisation de rétroaction HARQ,
dans lequel les multiples cellules de desserte comprennent une cellule primaire, PCell, et une cellule secondaire, SCell, configurées pour une transmission de PUCCH et la synchronisation de rétroaction HARQ est associée à de créneaux de la PCell.

6. Procédé de la revendication 5, dans lequel, dans le cas où un créneau de la PCell chevauche dans le temps plus d'un créneau de la SCell configurée pour la transmission de PUCCH et que le PUCCH doit être reçu sur la SCell configurée pour la transmission de PUCCH, un créneau pour le PUCCH est un premier créneau de créneaux qui se chevauchent de la SCell configurée pour la transmission de PUCCH.

7. Procédé de la revendication 5, dans lequel la longueur du créneau pour le PUCCH est basée sur un espacement de sous-porteuses de référence, SCS, configuré pour la PCell, et
dans lequel les DCI comprennent un indicateur de la synchronisation de rétroaction HARQ.

8. Terminal dans un système de communication sans fil, le terminal comprenant :
un émetteur-récepteur ; et
une commande configurée pour :
recevoir, depuis une station de base via l'émetteur-récepteur, des informations de commande de liaison descendante, DCI,
recevoir, depuis la station de base via l'émetteur-récepteur, un canal physique partagé de liaison descendante, PDSCH, en se basant sur les DCI, et
transmettre, à la station de base, via l'émetteur-récepteur, un canal de commande montante physique, PUCCH, comprenant des informations de rétroaction de demande automatique hybride, HARQ, pour le PDSCH sur au moins une de multiples cellules de desserte selon une synchronisation de rétroaction HARQ,
dans lequel les multiples cellules de desserte comprennent une cellule primaire, PCell, et une cellule secondaire, SCell, configurées pour une transmission de PUCCH, et la synchronisation de rétroaction HARQ est basée sur des créneaux de la PCell.

9. Terminal de la revendication 8, dans lequel lune longueur de créneau pour le PUCCH est basée sur une configuration d'espacement de sous-porteuses de référence, SCS, pour la PCell.

10. Terminal de la revendication 8, dans lequel la commande est en outre configurée pour, dans le cas où un créneau de la PCell chevauche dans le temps plus d'un créneau de la SCell configurée pour la transmission de PUCCH et que le PUCCH doit être transmis sur la SCell configurée pour la transmission de PUCCH, commander un premier créneau de créneaux chevauchants de la SCell configurée pour la transmission de PUCCH en tant que créneau pour le PUCCH.

11. Terminal de la revendication 8, dans lequel les DCI comprennent un indicateur indiquant la synchronisation de rétroaction HARQ.

12. Station de base dans un système de communication sans fil, la station de base comprenant :
un émetteur-récepteur ; et
une commande configurée pour :
transmettre, à un terminal via l'émetteur-récepteur, des informations de commande de liaison descendante, DCI,
transmettre au terminal, via l'émetteur-récepteur, un canal physique partagé de liaison descendante, PDSCH, en fonction des DCI, et
recevoir, en provenance du terminal, via l'émetteur-récepteur, un canal de commande montante physique, PUCCH, comprenant des informations de rétroaction de demande automatique hybride, HARQ, pour le PDSCH sur au moins une de multiples cellules de desserte conformément à une synchronisation de rétroaction HARQ,
dans laquelle les multiples cellules de desserte comprennent une cellule primaire, PCell, et une cellule secondaire, SCell, configurées pour une transmission de PUCCH et la synchronisation de rétroaction HARQ est associée à de créneaux de la PCell.

13. Station de base de la revendication 12, dans laquelle une longueur de créneau pour le PUCCH est basée sur une configuration d'espacement de sous-porteuses de référence, SCS, pour la PCell.

14. Station de base de la revendication 12, dans laquelle, dans le cas où un créneau de la PCell chevauche dans le temps plus d'un créneau de la SCell configurée pour la transmission de PUCCH et que le PUCCH doit être reçu sur la SCell configurée pour la transmission de PUCCH, un créneau pour le PUCCH est un premier créneau de créneaux qui se chevauchent de la SCell configurée pour la transmission de PUCCH.

15. Station de base de la revendication 12, dans laquelle les DCI comprennent un indicateur indiquant la synchronisation de rétroaction HARQ.
